# EUROPEAN PATENT APPLICATION

(11) **EP 4 421 213 A1**
(43) Date of publication of application: **28.08.2024**
(21) Application number: 23164017.8
(22) Date of filing: 24.03.2023
(51) Int. Cl.: C25B 11/051, B01J 27/24, C25B 11/055, C25B 11/057, C25B 11/075, H01M 4/90

(54) **SINGLE ATOM CATALYST HAVING DOUBLE ACTIVE SITES AND METHOD OF FABRICATING THE SAME**

(30) Priority: 21.02.2023 KR 20230023176
(71) Applicant: Ulsan National Institute of Science and Technology (UNIST), Eonyang-eup Ulju-gun Ulsan 44919 (KR)
(72) Inventor: KWON, Young Kook, 44919 Ulsan (KR); LIM, Han Kwon, 44919 Ulsan (KR); CHOI, Han Saem, 44919 Ulsan (KR); SHIN, Seok Min, 44919 Ulsan (KR)
(74) Representative: Frenkel, Matthias Alexander

(57) **Abstract**

The present invention relates to a single atom catalyst and, more particularly, to a single atom catalyst having double active sites which improves the activity of an electrochemical reaction through the development of high-dispersion and high-support synthesis technology.

## Description

### Technical Field

The present invention relates to a single atom catalyst and, more particularly, to a single atom catalyst having double active sites which improves the activity of an electrochemical reaction through the development of high-dispersion and high-support synthesis technology, simultaneously suppressing hydrogen evolution reaction as a side reaction, and easily breaking nitrogen molecules.

### Background Art

Most of electrochemical reduction reactions performed in an aqueous phase are accompanied by a hydrogen evolution reaction (HER). A high reaction selectivity of target products (e.g., ammonia, urea and ethylene) is required to preoccupy a market relating to green ammonia that will reduce greenhouse gas and support hydrogen economy. To solve this problem, a technique of designing a catalyst for suppressing a hydrogen evolution reaction is required.

In the case of nitrogen conversion ammonia synthesis that has the most intense competition reaction with the HER among electrochemical reduction reactions, most of the active sites are taken over by protons (H+) due to the extremely low solubility of nitrogen and the inert nature of the triple bond such that the HER is dominant. Therefore, it is important to suppress the HER and provide the active sites of a catalyst specialized for the activation of nitrogen molecules (N₂) as a matter to be considered when designing an electrocatalyst for nitrogen conversion ammonia synthesis.

In conventional bulk catalysts for electrochemical nitrogen conversion ammonia synthesis, protons are adsorbed to each metal atom, and an environment in which an HER occurs well is created due to the ensemble effect thereof. On the other hand, in the structure of a single atom catalyst, one metal atom is independently isolated. Thus, the single atom catalyst is expected to reduce the ensemble effect and maximize the unique properties of the material due to the single atom. In addition, the single atom catalyst can reduce agglomeration of metal atoms to exhibit high durability performance, thereby preventing catalyst deterioration.

The structure of most conventional single atom catalysts is usually completed by substituting carbon in a graphene structure with a metal atom or firmly fixing a metal atom to an N edge site in the structure of a nitrogen-doped graphene. At this time, the atoms with which the metal forms a coordination are nitrogen and carbon having a high electronegativity, and an environment with an extremely low electronic density is created. As a result, molecules that donate a pair of unshared electrons (e.g., COz and N₂) tend to attach more readily to single atom metal active sites. Although such a single atom catalyst may suppress an HER by reducing the ensemble effect, it is a metal having oxidation/reduction power according to change of an oxidation number. Thus, the HER that is rich in reactants and has a fast kinetic is not easily suppressed.

At this time, the structure of a catalyst in which the N edge site is partially substituted with a p block element may be employed in order to control the electronic density environment of the single atom catalyst. When such a double active site is employed, an environment in which the HER active site of the metal single atom may be transferred to the surrounding p block atoms may be created. Typically, boron in boron-doped graphene has a bonding structure with carbon. Due to the difference in electronegativity between the two elements, boron becomes a positively charged active site with a relatively low electronic density. As a result, positively charged protons (H+) may not easily bind to boron active sites to suppress the HER, and a pair of unshared electrons of nitrogen better bind to positively charged boron active sites. In addition, boron has a unique electronic structure to form an sp3 hybridized orbital such that the sp3 orbital forms a sigma bond with a pair of unshared electrons of nitrogen, and increases the electronic density in the anti-bonding region of nitrogen through pi backdonation in the electron-filled sp3 orbital. This is identical to the mechanism of reducing the reactant of a basic transition metal with abundant available electrons by a 3d orbital. However, since boron has three electrons in the sp3 orbital to have a little change in the oxidation number, the available electronic density is limited. That is, boron has limited catalytic performance.

### Prior Art Citations

Korean Laid-open Patent Publication No. 2022-0058260

### Summary of Invention

### Technical Problem

An object of an embodiment of the present invention is to provide a single atom catalyst that maximizes the electrochemical catalytic performance of a metal with a structure coordinated with carbon or nitrogen and suppresses a hydrogen evolution reaction (HER) considered a side reaction.

The objects of the present invention are not limited to those mentioned above, and other objects not mentioned above will be clearly understood from the description below.

### Solution to Problem

A single atom catalyst according to an embodiment of the present invention comprises a carbon support doped with nitrogen (N); a p-block element doped on the carbon support; and a transition metal forming a coordination bond between the nitrogen (N) and the p-block element.

The single atom catalyst may have a bonding structure represented by Formula 1 below:

[Formula 1] M-XₙN₄₋ₙ

wherein M is a transition metal, X is a p-block element, and n may be an integer of 1 to 3.

The carbon support may be selected from the group consisting of carbon nanotubes (CNTs), functionalized CNTs, graphenes, graphene oxides, reduced graphene oxides, graphites, fullerenes, buckytubes, diamonds, amorphous carbons, vapor-grown carbon nanofibers, Super P carbon, Ketjen Black carbon, carbon fibers, hard carbons, hollow carbon nanoparticles, microporous carbon nanoparticles, mesoporous carbon nanoparticles, carbon nanorattles, glucose, polyacrylonitrile and chitosan.

The p-block element may be selected from the group consisting of a boron (B) element, a phosphorus (P) element, a selenium (Se) element and a sulfur (S) element, and the p-block element may be a boron (B) element.

The transition metal may be selected from the group consisting of manganese (Mn), tungsten (W), molybdenum (Mo), chromium (Cr), iron (Fe), vanadium (V), titanium (Ti), copper (Cu), zinc (Zn), cobalt (Co), nickel (Ni), palladium (Pd), ruthenium (Ru), indium (In), tin (Sn), bismuth (Bi), rhodium (Rh), osmium (Os) and tantalum (Ta), and the transition metal may be manganese (Mn).

The content of the transition metal may be 0.5 to 15 wt%.

In addition, the method of synthesizing a single atom catalyst according to an embodiment of the present invention comprises the steps of constantly introducing an aqueous solution of a transition metal precursor into an aqueous solution of a carbon support doped with nitrogen (N); adding a p-block element precursor and a metal salt to the aqueous solution of the carbon support to prepare a heat-treated precursor; heat-treating the heat-treated precursor to prepare an intermediate; and acid washing the intermediate.

The carbon support may be selected from the group consisting of carbon nanotubes (CNTs), functionalized CNTs, graphenes, graphene oxides, reduced graphene oxides, graphites, fullerenes, buckytubes, diamonds, amorphous carbons, vapor-grown carbon nanofibers, Super P carbon, Ketjen Black carbon, carbon fibers (carbon fibers), hard carbons, hollow carbon nanoparticles, microporous carbon nanoparticles, mesoporous carbon nanoparticles, carbon nanorattles, glucose, polyacrylonitrile and chitosan.

The transition metal may be selected from the group consisting of manganese (Mn), tungsten (W), molybdenum (Mo), chromium (Cr), iron (Fe), vanadium (V), titanium (Ti), copper (Cu), zinc (Zn), cobalt (Co), nickel (Ni), palladium (Pd), ruthenium (Ru), indium (In), tin (Sn), bismuth (Bi), rhodium (Rh), osmium (Os) and tantalum (Ta).

The p-block element may be selected from the group consisting of boron (B) element, phosphorus (P) element, selenium (Se) element and sulfur (S) element.

The p-block element precursor may be an acid substance containing a p-block element.

The acid substance may be acetic acid, sulfuric acid (H₂SO₄), hydrochloric acid (HCl), perchloric acid (HClO₄), phosphoric acid (H₃PO₄) or nitric acid (HNO₃), and the concentration of the acid substance may be 1 mM to 1 M.

The metal salt may be metal chloride, metal carbonate or metal nitrate.

### Advantageous Effects of Invention

According to an embodiment of the present invention, the present invention provides a single atom catalyst that maximizes the electrochemical catalytic performance of a metal with a structure in which carbon or nitrogen is coordinated and suppresses a hydrogen evolution reaction (HER) considered a side reaction.

In addition, the single atom catalyst according to an embodiment of the present invention synthesizes a high yield of ammonia in a nitrogen conversion ammonia synthesis reaction.

In addition, the single atom catalyst according to an embodiment of the present invention has a high selectivity for carbon monoxide (CO) in a carbon dioxide conversion reaction.

In addition, the single atom catalyst according to an embodiment of the present invention has a high selectivity for urea in a simultaneous conversion reaction of carbon dioxide and nitrogen.

### Brief Description of Drawings

FIG. 1A shows the schematic diagram of a single atom catalyst according to an embodiment of the present invention.
FIG. 1B shows the steps of the synthesis reaction of a single atom catalyst according to an embodiment of the present invention.
FIGS. 2A to 2E show the results of analyzing the structure of a single atom catalyst according to an embodiment of the present invention.
FIGS. 3A to 3D show the TEM images of a single atom catalyst according to an embodiment of the present invention.
FIGS. 4A and 4B show the TEM images of a single atom catalyst according to an embodiment of the present invention.
FIGS. 5A and 5B show the TEM images of single atom catalysts according to an embodiment and a comparative example of the present invention.
FIGS. 6A and 6B show the TEM images of single atom catalysts according to an embodiment and a comparative example of the present invention.
FIGS. 7A and 7B show the TEM images of single atom catalysts according to an embodiment and a comparative example of the present invention.
FIGS. 8A to 8D show the TEM images of single atom catalysts according to an embodiment of the present invention.
FIG. 9 shows the results of evaluating ammonia conversion reaction performance in an aqueous-phase reaction of a single atom catalyst according to an embodiment of the present invention.
FIG. 10 shows Density Functional Theory (DFT) calculations according to reactions of single atom catalysts according to an embodiment of the present invention and a comparative example.
FIG. 11 shows the results of evaluating the ammonia conversion reaction performance in a gas-phase reaction of a single atom catalyst according to an embodiment of the present invention.
FIG. 12A shows the results of evaluating the carbon dioxide reduction reaction of a single atom catalyst according to an embodiment of the present invention.
FIG. 12B shows the results of evaluating the carbon dioxide reduction reaction of single atom catalysts according to a comparative example of the present invention.
FIG. 13A shows the results of evaluating the synthesis reaction of urea by simultaneous reduction of carbon dioxide and nitrogen by a single atom catalyst according to an embodiment of the present invention.
FIG. 13B shows the results of evaluating the synthesis reaction of urea by simultaneous reduction of carbon dioxide and nitrogen by single atom catalysts according to comparative examples of the present invention.
FIG. 13C shows the results of evaluating the ammonia conversion reaction in the presence of only nitrogen in a single atom catalyst according to an embodiment of the present invention.
FIG. 14 illustrates the results of evaluating and comparing the synthesis reaction of urea by simultaneous reduction of carbon dioxide and nitrogen by single atom catalysts according to an embodiment, a comparative example and a control group of the present invention.
FIG. 15 shows the results of analyzing the average voltage over time in the urea synthesis of a single atom catalyst according to an embodiment of the present invention.
FIG. 16 shows a C-N coupling mechanism in the synthesis of urea by a single atom catalyst according to an embodiment of the present invention.
FIG. 17 shows a schematic diagram for explaining the formation of a doubly active site of a single atom catalyst according to an embodiment of the present invention.
FIG. 18 shows the results of measuring the C-N coupling activity of a single atom catalyst according to an embodiment of the present invention.
FIGS. 19A to 19C show the TEM images of a single atom catalyst according to an embodiment of the present invention.

### Mode for Invention

The embodiments of the present invention will be described in detail so that a person skilled in the art can easily practice the present invention. However, the present invention can be embodied in many different forms and is not limited to the embodiments described herein.

Hereinafter, a single atom catalyst according to an embodiment of the present invention comprises a carbon support doped with nitrogen (N); a p-block element doped on the carbon support; and a transition metal forming a coordination bond between the nitrogen (N) and the p-block element.

A single atom catalyst according to an embodiment of the present invention may comprise a bonding structure represented by Formula 1 below

[Formula 1] M-XₙN₄₋ₙ

wherein M is a transition metal, X is a p-block element, and n may be an integer of 1 to 3.

The carbon support may be doped with a p-block element and may have a two-dimensional structure. As an example, the carbon support may be selected from the group consisting of carbon nanotubes (CNTs), functionalized CNTs, graphenes, graphene oxides, reduced graphene oxides, graphites, fullerenes, buckytubes, diamonds, amorphous carbons, vapor-grown carbon nanofibers, Super P carbon, Ketjen Black carbon, carbon fibers, hard carbons, hollow carbon nanoparticles, microporous carbon nanoparticles, mesoporous carbon nanoparticles, carbon nanorattles, glucose, polyacrylonitrile and chitosan.

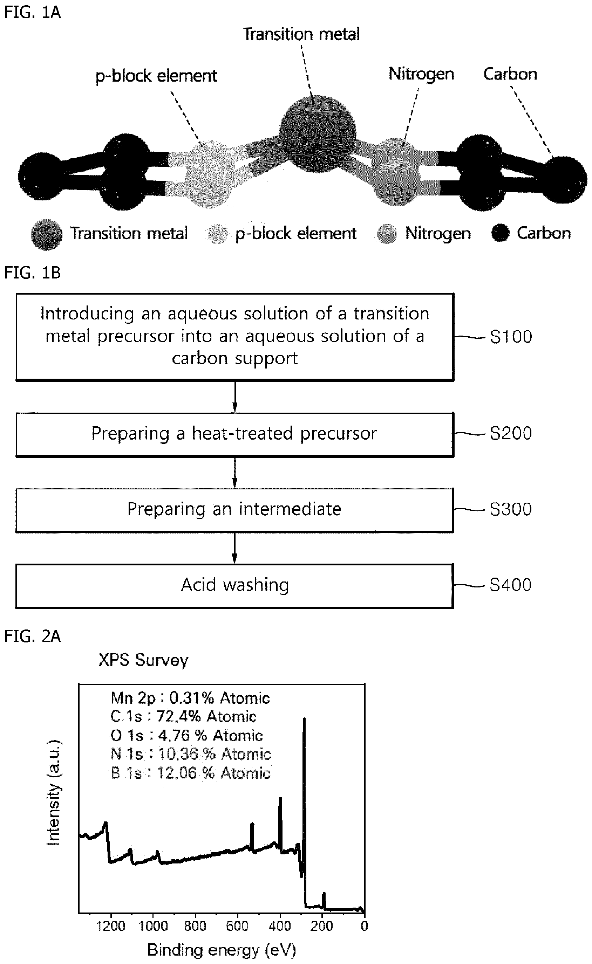

The bonding structure represented by Formula 1 may have a structure shown in the schematic diagram of FIG. 1A.

In the carbon support, the nitrogen atom (N) coordination is stably fixing the metal atom (cation) to the N site by using a high electronegativity of nitrogen such that the catalyst may exist as a single atom. For this purpose, a reducing agent comprising nitrogen (N) may be contained in the synthesis process of a catalyst, or a naturally occurring material containing nitrogen (N) may be used.

The carbon support may be chitosan and, more specifically, may be provided from chitosan, and the carbon support is a carbon layer derived from chitosan and provided during the carbonization process of chitosan. Chitosan as a naturally-derived material containing nitrogen atoms (N) provides nitrogen atoms (N) to make the status of metal atoms into an electron-deficient structure, thereby helping to receive a pair of unshared electrons from reactants. More specifically, the amine group (-NH₂) of chitosan helps metal cations to easily attach as an N edge site.

The p-block element is doped and fixed on the carbon support, and may share orbital between p-orbitals whose outermost electron structure has a similar potential to that of the reactant to lower the energy potential of the anti-bonding region (n* orbital) of the reactant and activate the movement of electrons, and the reactant may be N₂, Oz or COz. In addition, the p-block element that has a low electronegativity and shows a catalytic activity, is doped on the carbon support to transfer the active site of the hydrogen evolution reaction (HER) of the transition metal to the p-block element, thereby inhibiting the hydrogen evolution reaction of the transition metal.

As an example, the p-block element may be selected from the group consisting of a boron (B) element, a phosphorus (P) element, a selenium (Se) element, and a sulfur (S) element. The p-block element may preferably be a boron (B) element.

The transition metal may be selected from the group consisting of manganese (Mn), tungsten (W), molybdenum (Mo), chromium (Cr), iron (Fe), vanadium (V), titanium (Ti), copper (Cu), zinc (Zn), cobalt (Co), nickel (Ni), palladium (Pd), ruthenium (Ru), indium (In), tin (Sn), bismuth (Bi), rhodium (Rh), osmium (Os) and tantalum (Ta). The transition metal may preferably be manganese (Mn).

The transition metal is a coordination bond between the nitrogen (N) and the p-block element, may be a coordination bond with 4 atoms and may form a coordinate bond of 1 to 3 p-block elements with 1 to 3 nitrogen (N).

The content of the transition metal may be 0.5 to 15 wt%.

FIG. 1B shows a flowchart of a method of synthesizing a single atom catalyst according to an embodiment of the present invention.

Referring to FIG. 1B, a method of synthesizing a single atom catalyst according to an embodiment of the present invention comprises the steps of constantly introducing an aqueous solution of a transition metal precursor into an aqueous solution of a carbon support doped with nitrogen (N) (S100); adding a p-block element precursor and a metal salt to the aqueous solution of the carbon support to prepare a heat-treated precursor (S200); heat-treating the heat-treated precursor to prepare an intermediate (S300); and acid washing the intermediate (S400).

In S100, the carbon support may be selected from the group consisting of carbon nanotubes (CNTs), functionalized CNTs, graphenes, graphene oxides, reduced graphene oxides, graphites, fullerenes, buckytubes, diamonds, amorphous carbons, vapor-grown carbon nanofibers, Super P carbon, Ketjen Black carbon, carbon fibers, hard carbons, hollow carbon nanoparticles, microporous carbon nanoparticles, mesoporous carbon nanoparticles, carbon nanorattles, glucose, polyacrylonitrile and chitosan.

At this time, the chitosan is a carbon matrix having an N edge site capable of immobilizing metal cations.

In S100, when chitosan is used as a carbon support, an acid solvent may be used as a solvent of the chitosan aqueous solution (carbon support aqueous solution), the acid solvent may be hydrochloric acid (HCl), and chitosan is entangled in the structure of a long chain of molecules via the structure of Oxo-bridge (Glycosidic bond). Since more N edge sites need to be exposed through its depolymerization, chitosan may be depolymerized under a hydrochloric acid, and an acid substance containing the p-block element may be used to protonate the glycosidic bond forming the oxo-bridge of chitosan and generate dehydration. In addition, in chitosan, the structures of N-Acetylglucosamine (in a chitin structure in which an acetyl group [-CH₃CO] covers an amine group [-NH₂]) and Glucosamine are randomly connected in the structure of Oxo-bridge. In N-Acetylglucosamine, the acetyl group covers the amine group, which is a metal cation binding site and, thus, adversely affects the single atom catalyst, which may cause a deacetylation reaction in a strong acid atmosphere of a hydrochloric acid to expose the amine group (-NH₂). As a result, it is considered that a very thin carbon layer is formed in the process of carbonization through the thinned matrix as the chain in which the chitosan polymer is entangled is released. Therefore, the acid synthesis method can form a thin and wide single atom catalyst and can further expose the active sites of the single atom catalyst.

In S100, the transition metal may be selected from the group consisting of manganese (Mn), tungsten (W), molybdenum (Mo), chromium (Cr), iron (Fe), vanadium (V), titanium (Ti), copper (Cu), zinc (Zn), cobalt (Co), nickel (Ni), palladium (Pd), ruthenium (Ru), indium (In), tin (Sn), bismuth (Bi), rhodium (Rh), osmium (Os) and tantalum (Ta).

In S100, an acid solvent may be used as a solvent of the aqueous solution of the transition metal precursor, and the acid solvent may be hydrochloric acid (HCl).

In S100, the aqueous solution of the transition metal precursor may be added to the aqueous solution of chitosan at a constant rate and may preferably be added to the aqueous solution of chitosan at a rate of 1 mL/min. As such, the transition metal cation dissolved in the aqueous solution of the transition metal precursor is wetted toward the center of the chitosan and combined in a diffusion manner, which is expected to spread a small amount slowly and uniformly when added at a constant rate, as compared to when diffused by adding the aqueous solution of the transition metal precursor to the aqueous solution of chitosan at once. In addition, in the process of depolymerization, chitosan is changed into a gel form under strong acid conditions. When gelated, the viscosity increases, resulting in poor dispersion. Thus, the aqueous solution of the transition metal precursor should be added to the aqueous solution of chitosan at a very slow rate of 1 mL/min in order to allow sufficient diffusion of metal cations by slowly adding same without abruptly lowering the pH.

In S200, the p-block element may be selected from the group consisting of boron (B) element, phosphorus (P) element, selenium (Se) element and sulfur (S) element. The p-block element precursor may be an acid substance containing the p-block element. The acid substance may be acetic acid, sulfuric acid (H₂SO₄), hydrochloric acid (HCl), perchloric acid (HClO₄), phosphoric acid (H₃PO₄) or nitric acid (HNO₃), and the concentration of the acid substance may be 1 mM to 1 M.

In S200, the metal salt may be a metal molten salt, and the metal salt may be metal chloride, metal carbonate or metal nitrate. The metal chloride may be potassium chloride (KCl), sodium chloride (NaCl) or lithium chloride (LiCl). In particular, potassium chloride (KCl) has a melting point of 770 °C and, thus, is expected to have a high ionic conductivity by melting in the single atom catalyst synthesis method of reacting at a high temperature and produce a metal thermal reduction effect by Cl- such that the metal cations may easily reach the N edge site and increase the active sites of the single atom catalyst. The metal carbonate may be potassium carbonate (K₂CO₃), calcium carbonate (CaCO₃), sodium carbonate (Na₂CO₃) or lithium carbonate (Li₂CO₃). The metal nitrate may be sodium nitrate (NaNO₃), potassium nitrate (KNO₃) or lithium nitrate (LiNO₃).

In S300, the heat treatment precursor may be performed under an inert gas atmosphere, the inert gas may be Ar or N₂, and S300 may be performing a heat treatment at a heating rate of 3 to 30 °C/min at 500 to 1,000 °C for 1 to 6 hours.

In S400, the acid washing may be performed by using sulfuric acid (H₂SO₄) or hydrochloric acid (HCl), preferably simultaneously with ultrasonic treatment.

Hereinafter, the present invention will be described in more detail through embodiments. The embodiments of the present invention are merely an example for understanding the present invention, and do not limit the scope of the present invention.

### Example 1. Synthesis of Single Atom Catalyst

After preparing chitosan, manganese chloride (MnCh), boric acid and potassium chloride (KCl) in the amounts shown in Table 1 below to have a weight ratio (w:w) of 4:1:0.5:4, chitosan was dissolved in 30 mL of deionized water (DI water) to prepare an aqueous solution of chitosan, and manganese chloride was dissolved in 50 mM of HCl 20 mL to prepare an aqueous solution of manganese chloride. Thereafter, the aqueous solution of manganese chloride was added to the prepared aqueous solution of chitosan at a rate of 1 mL/min. When the aqueous solution of manganese chloride was added, the aqueous solution of chitosan was continuously stirred at 80 °C and 500 rpm. Thereafter, boric acid and potassium chloride were added to the aqueous solution of chitosan, stirred for 1 hour (80°C, 500 rpm), and then dried over hot water to prepare a solid mixture in the form of powder. The solid mixture was heat-treated in a tube furnace under an Ar atmosphere at a heating rate of 3 °C/min for 4 hours (hr) after reaching 1,000 °C to prepare a solid intermediate. The solid intermediate was prepared again in the form of powder by using a mortar, washed with ultrasonic waves and dispersed in 1 M H₂SO₄, washed with each of tertiary distilled water and ethanol anhydrous three times by using a centrifuge to obtain a final product, and then dried by using a vacuum oven to synthesize a Mn-N/B-C single atom catalyst.

### Example 2. Synthesis of Single Atom Catalyst

It was carried out in the same manner as in Example 1, but chitosan, manganese chloride (MnCh), boric acid and potassium chloride (KCl) were prepared in a weight ratio (w:w) of 1:1:0.5:4.

### Example 3. Synthesis of Single Atom Catalyst

It was carried out in the same manner as in Example 1, but chitosan, manganese chloride (MnCh), boric acid and potassium chloride (KCl) were prepared in a weight ratio (w:w) of 2:1:0.5:4.

### Example 4. Synthesis of Single Atom Catalyst

It was carried out in the same manner as in Example 1, but chitosan, manganese chloride (MnCh), boric acid and potassium chloride (KCl) were prepared in a weight ratio (w:w) of 10:1:0.5:4.

**[Table 1]**

| | **Chitosan** | **MnCl₂** | **Boric acid** | **KCl** |
|---|---|---|---|---|
| **Example 1** | 1.5 g | 0.375 g | 0.1875 g | 1.5 g |
| **Example 2** | 0.375 g | 0.375 g | 0.1875 g | 0.375 g |
| **Example 3** | 0.75 g | 0.375 g | 0.1875 g | 0.75 g |
| **Example 4** | 3.75 g | 0.375 g | 0.1875 g | 3.75 g |

### Control Group. Synthesis of MnB Catalyst

After mixing MgB and MnCh in a ratio of 1:1 (w:w), the mixture was heat-treated in a tube furnace at a heating rate of 5 °C/min and under an Ar atmosphere at 650 °C for 2 hours, washed with ultrasonic waves and dispersed in 1 M H₂SO₄, washed with each of tertiary distilled water and ethanol anhydrous three times by using a centrifuge to obtain a final product, and then dried by using a vacuum oven to synthesize a MnB catalyst.

### Experimental Example 1. Analysis of Structure

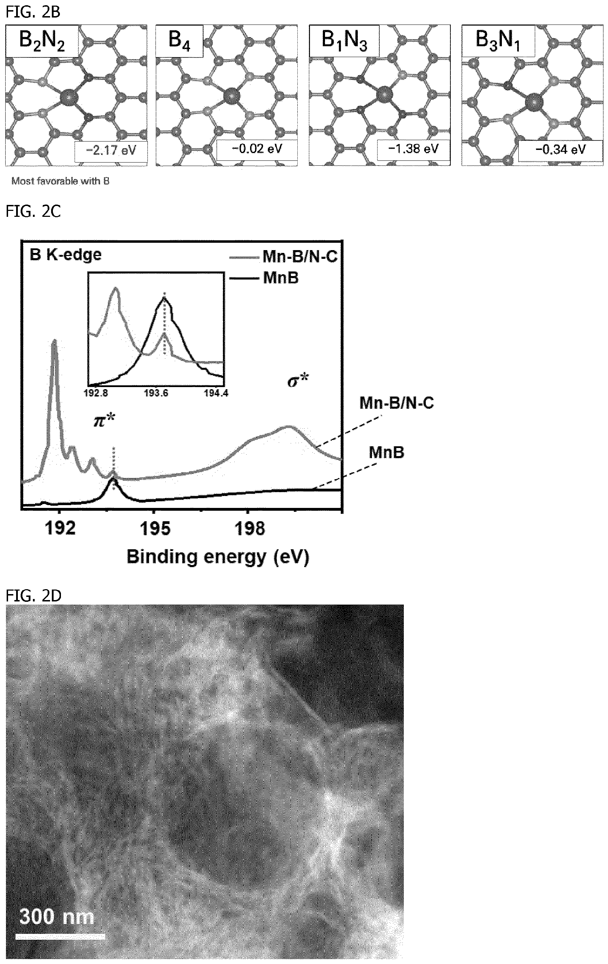

XPS analysis was performed on the single atom catalyst synthesized in Example 1 and is shown in FIG. 2A, and the results of NEXAFS analysis are shown in FIG. 2B. FIG. 2B also shows the results of NEXAFS analysis of an MnB catalyst as a control group.

Referring to FIG. 2A, the ratio of boron and nitrogen is approximately 1:1. In addition, referring to FIG. 2B, structural relaxation representing a stable structure through DFT calculation shows that, when boron is present, the structure of B₂N₂ is the most stable.

In addition, referring to FIG. 2C, it is confirmed that the single atom catalyst synthesized in Example 1 has a peak strongly appearing in manganese boride (Mn-B).

Accordingly, in view of FIGS. 2A to 2C, it is confirmed that the single atom catalyst synthesized in Example 1 has a structure of Mn-B₂N₂-C.

The TEM image of the single atom catalyst synthesized in Example 1 is shown in FIG. 2D. Referring to FIG. 2D, it is confirmed that the single atom catalyst synthesized in Example 1 has a porous structure and has a wide surface area distribution.

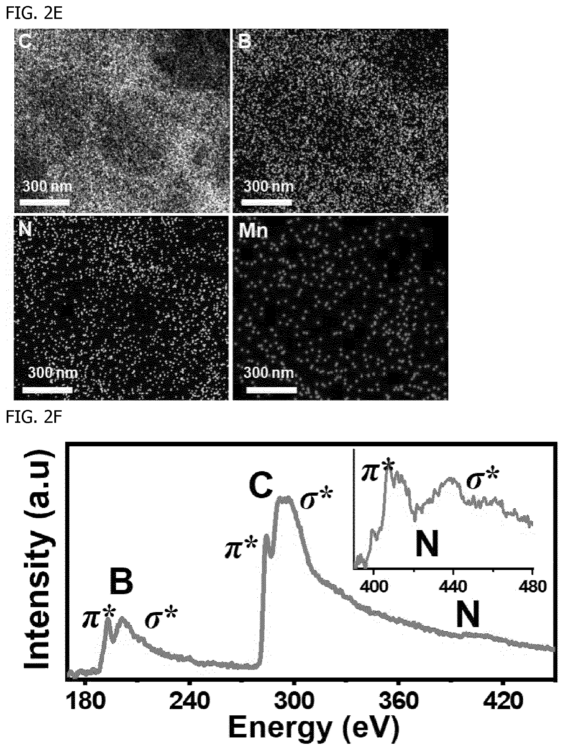

The EDS Mapping images of the single atom catalyst synthesized in Example 1 are shown in FIG. 2E. Referring to FIG. 2E, it is confirmed that the single atom catalyst synthesized in Example 1 has carbon atoms (C), boron atoms (B), nitrogen atoms (N) and manganese atoms (Mn) distributed therein.

The EELS spectrum of the TEM image of the single atom catalyst synthesized in Example 1 in FIG. 2D is shown in FIG. 2F. Referring to FIG. 2F, it is confirmed that carbon atoms (C), boron atoms (B) and nitrogen atoms (N) coexist at the same site, and they all have π^{∗}-σ^{∗} signals, which indicates that they are arranged in a two-dimensional (2D) structure on the same plane.

### Experimental Example 2. Analysis According to Chitosan and MnCl₂ Ratio

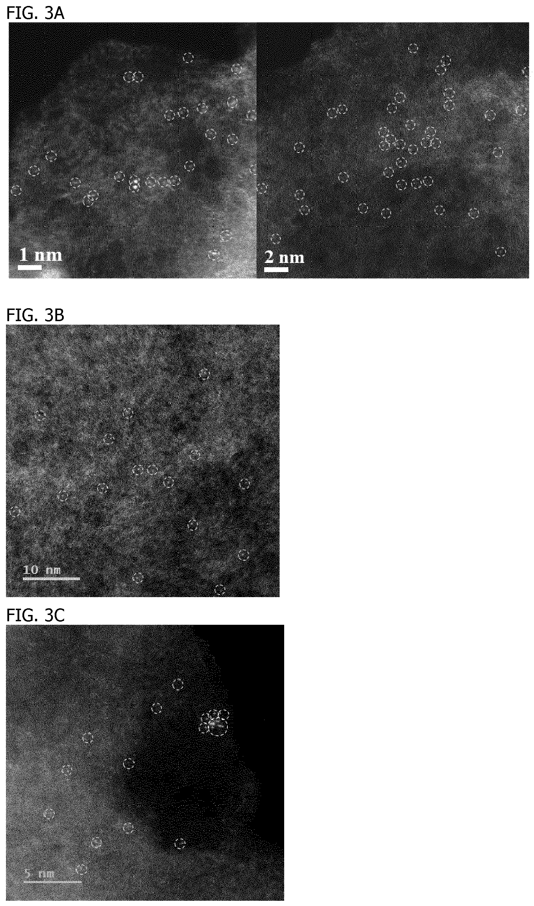

Analysis was performed on the TEM images of the single atom catalysts synthesized in Examples 1 to 4, and the analyzed TEM images are shown in FIGS. 3A to 3D.

Referring to FIG. 3A, it is confirmed that, although some Mn clusters exist in the single atom catalyst synthesized in Example 1, MnOₓ disappears according to acid treatment, and Mn single atoms coexist.

On the other hand, referring to FIG. 3B, the single atom catalyst synthesized in Example 2 contains a relatively large amount of Mn metal salt (MnCh), as compared to Example 1, which confirms that a large number of MnOₓ or Mn clusters exist. Referring to FIG. 3C, the single atom catalyst synthesized in Example 3 also contains a relatively large amount of Mn metal salt (MnCh), as compared to Example 1, which confirms that a large number of Mn clusters exist.

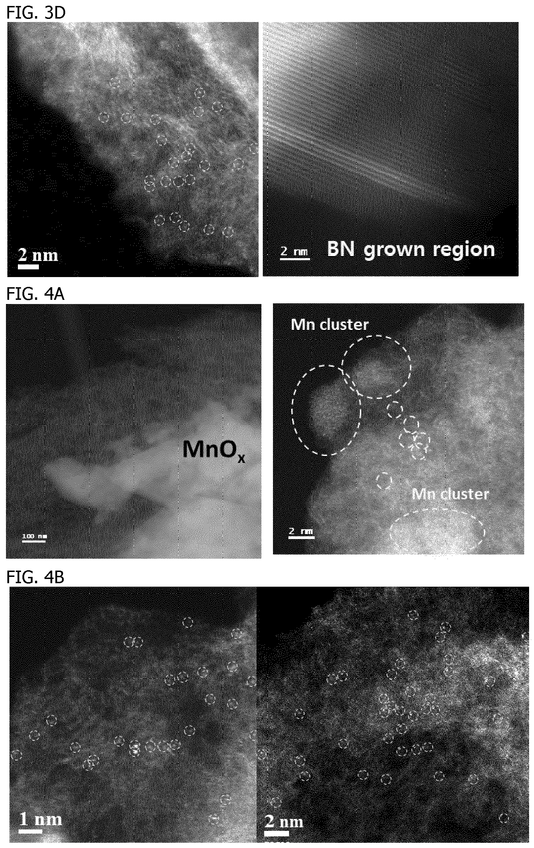

On the other hand, referring to FIG. 3D, the single atom catalyst synthesized in Example 4 contains a relatively small amount of Mn metal salt (MnCh), as compared to Example 1, which confirms that the number of the single atom catalysts is small and a large number of BN bonding layers are formed.

### Experimental Example 3. Analysis According to Acid Treatment

Analysis was performed on the TEM images of the single atom catalyst synthesized in Example 1 and the "solid intermediate" in Example 1, and the analyzed TEM images are shown in FIGS. 4A and 4B.

Referring to FIG. 4A, it is confirmed that the solid intermediate in Example 1 was not treated with 1 M H₂SO₄; and MnOₓ, Mn clusters and Mn single atoms coexist.

On the other hand, referring to FIG. 4B, it is confirmed that some Mn clusters exist in the single atom catalyst synthesized in Example 1, as treated with a strong acid of 1 M H₂SO₄, but MnOₓ disappears, and Mn single atoms coexist.

### Comparative Example 1

It was carried out in the same manner as in Example 1, but each of chitosan and manganese chloride was dissolved in distilled water (DI water) to prepare an aqueous solution of chitosan and an aqueous solution of manganese chloride, respectively.

### Experimental Example 4

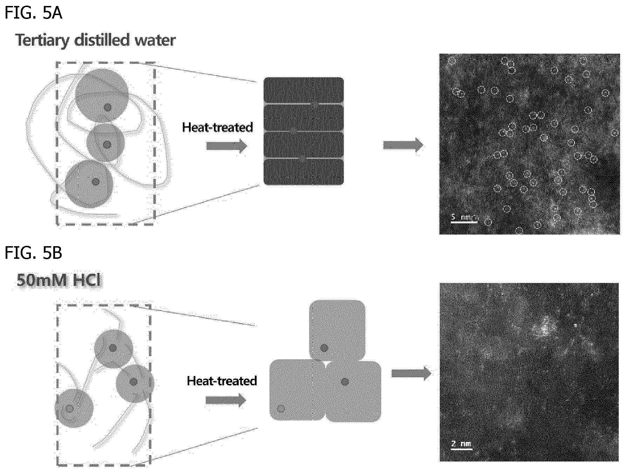

Analysis was performed on the TEM images of the single atom catalyst synthesized in Comparative Example 1 and the single atom catalyst synthesized in Example 1. The analyzed TEM images are shown in FIGS. 5A and 5B.

Referring to FIG. 5A, the single atom catalysts synthesized in Comparative Example 1 were prepared by dissolving each of chitosan and manganese chloride in tertiary distilled water to prepare an aqueous solution of chitosan and an aqueous solution of manganese chloride. Since Matrix of the finally synthesized single atom catalysts is thick, it is confirmed that some single atom catalysts are covered.

On the other hand, referring to FIG. 5B, the single atom catalysts synthesized in Example 1 were prepared by using an aqueous solution of chitosan, 50 mM of HCl and an aqueous solution of manganese chloride. It is confirmed that, since the matrix of the finally synthesized single atom catalysts is thin, the lattice structure is clear. It is considered that a very thin carbon layer is formed in the process of carbonization through a thinned matrix as the chains of the chitosan polymer are entangled under a strong acid atmosphere. Therefore, the synthesis method under strong acid conditions may form a thin and wide single atom catalyst and may further expose the active sites of the single atom catalyst.

### Comparative Example 2

It was carried out in the same manner as in Example 1, but the aqueous solution of chitosan was mixed with the aqueous solution of manganese chloride at once.

### Experimental Example 5

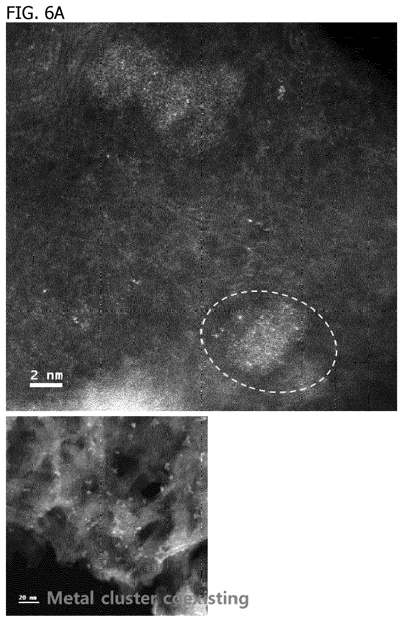

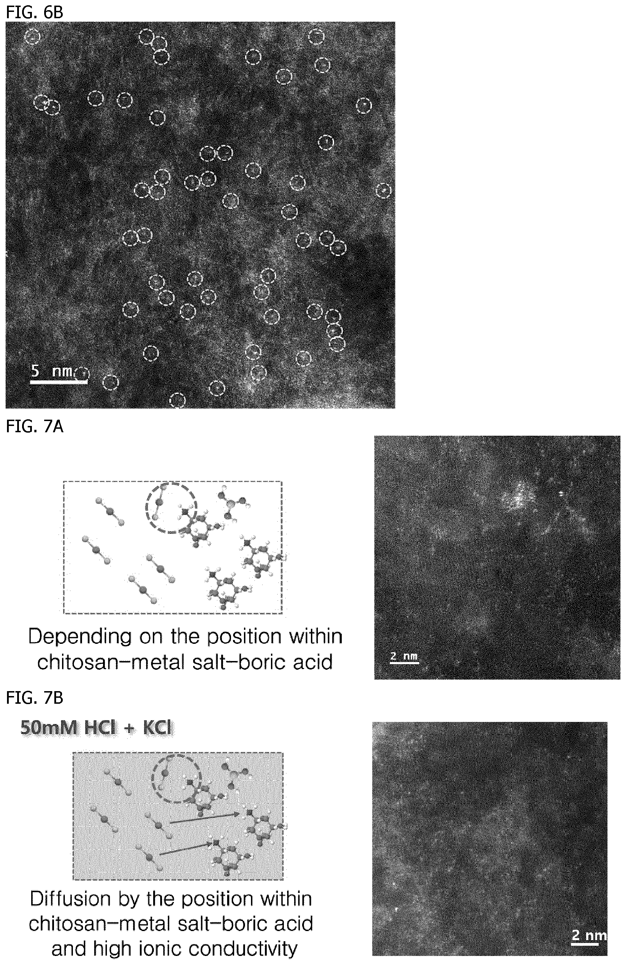

Analysis was performed on the TEM images of the single atom catalyst synthesized in Comparative Example 2 and the single atom catalyst synthesized in Example 1. The analyzed TEM images are shown in FIGS. 6A and 6B.

Referring to FIG. 6A, it is confirmed that, as the aqueous solution of chitosan and the aqueous solution of manganese chloride were mixed at once during the synthesis process, Mn clusters coexisted in the single atom catalyst synthesized in Comparative Example 2.

On the other hand, referring to FIG. 6B, it is confirmed that, as the aqueous solution of manganese chloride is added to the aqueous solution of chitosan at a constant rate during the synthesis process, only a few of Mn clusters existed in the single atom catalyst synthesized in Example 1.

In the method of synthesizing a single atom catalyst through chitosan, metal (Mn) cations dissolved in an aqueous solution are wetted toward the center of chitosan and combined in a diffusion way, and metal salt (MnCl₂) should be added at a very slow rate of 1 mL/min. Therefore, such method is expected to spread a small amount of the metal cations slowly and uniformly, as compared to when diffused by mixing the metal cations at once.

In addition, in the process of depolymerization, chitosan is changed into the form of a gel under strong acid conditions, and viscosity increases during gelation, resulting in poor dispersion. Therefore, in order to sufficiently diffuse metal (Mn) cations while adding them slowly without abruptly lowering the pH, they should be added at a very slow rate of 1 mL/min.

### Comparative Example 3

It was carried out in the same manner as in Example 1, but potassium chloride (KCl) was not added to the aqueous chitosan solution.

### Experimental Example 6

Analysis was performed on the TEM images of the single atom catalyst synthesized in Comparative Example 3 and the single atom catalyst synthesized in Example 1. The analyzed TEM images are shown in FIGS. 7A and 7B.

Referring to FIG. 7A, it is confirmed that the single atom catalyst synthesized in Comparative Example 3 has the structure of thinned carbon due to synthesis under acid conditions, but some clusters exist, and the amount of Mn is 1.09 wt%, which is relatively low due to combination formed by positional coincidence.

Referring to FIG. 7B, it is confirmed that the single atom catalyst synthesized in Example 1 has the structure of thinned carbon due to synthesis under acid conditions, and is composed of a clean single atom catalyst without Mn clusters, and the amount of Mn is 1.656 wt%, which is higher than the amount of Mn contained in the single atom catalyst to which potassium chloride was not added in FIG. 6A. In addition, the melting of potassium chloride increases the ionic conductivity such that Mn may be well combined with N and B.

### Example 5. Synthesis of Single Atom Catalyst

It was carried out in the same manner as in Example 1, but the solid mixture was heat-treated at 400 °C in a tube furnace to prepare a solid intermediate.

### Example 6. Synthesis of Single Atom Catalyst

It was carried out in the same manner as in Example 1, but the solid mixture was heat-treated at 600 °C in a tube furnace to prepare a solid intermediate.

### Example 7. Synthesis of Single Atom Catalyst

It was carried out in the same manner as in Example 1, but the solid mixture was heat-treated at 800 °C in a tube furnace to prepare a solid intermediate.

### Experimental Example 7. ICP-OES Analysis

Inductively Coupled Plasma-Optical Emission Spectroscopy (ICP-OES) was performed on the single atom catalysts synthesized in Examples 1 and 5 to 7. The results of the analysis are summarized in Table 2 below.

**[Table 2]**

| | **Mn** | **B** |
|---|---|---|
| **Example 1** | 1.656 wt% | 6.23 wt% |
| **Example 5** | 12.3 wt% | 0 wt% |
| **Example 6** | 6.7 wt% | 5.1 wt% |
| **Example 7** | 0.076 wt% | 3.3 wt% |

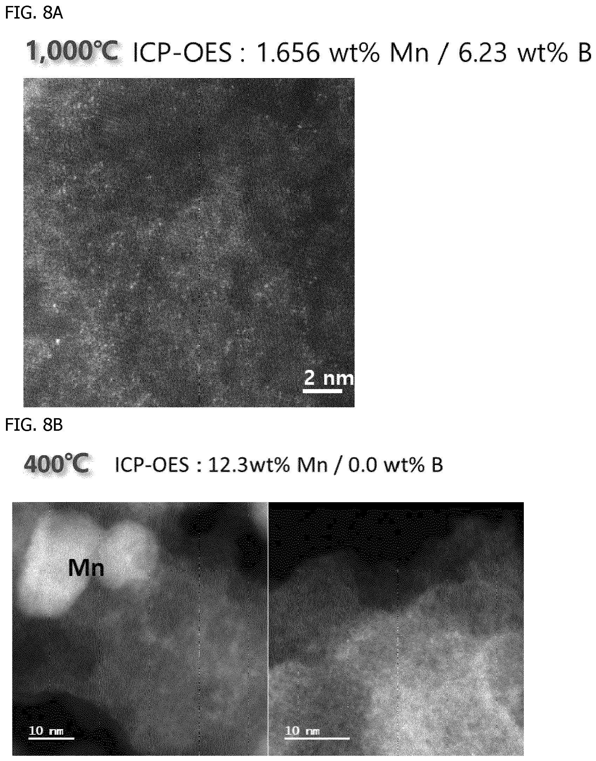

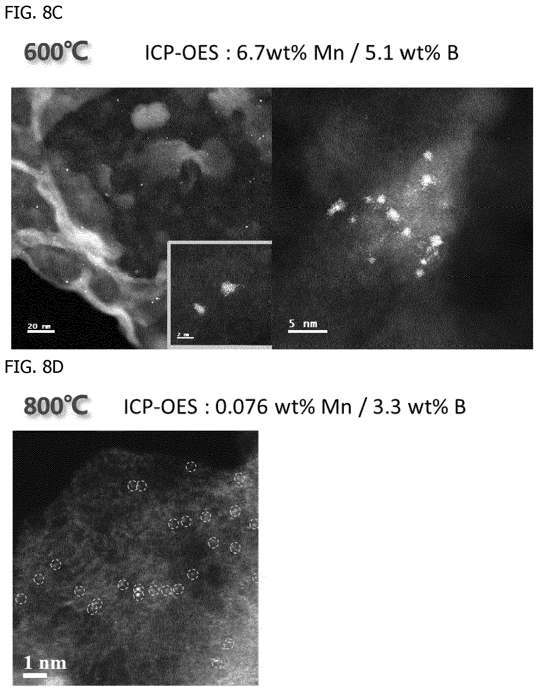

Analysis was performed on the TEM images of the single atom catalysts synthesized in Examples 1 and 5 to 7, and the analyzed TEM images are shown in FIGS. 8A and 8D.

Referring to FIG. 8A, it is confirmed that the solid mixture in Example 1 was heat-treated at a temperature of 1000°C, and the dispersion of metal (Mn) cations was better at a higher temperature.

Chitosan started to be carbonized at 180 °C and changed to the form of N-doped graphene, and metal (Mn) cations were then fixed to the N edge site, and boron was incorporated.

Referring to FIG. 8B, the solid mixture was heat-treated at 400 °C in Example 5, boron was not detected, and Mn was partially present in the form of MnOₓ.

Referring to FIG. 8C, the solid mixture was heat-treated at a temperature of 600 °C in Example 6, boron started to be coordinated from 600 °C, and Mn existed in the form of nanoclusters.

Referring to FIG. 8D, the solid mixture was heat-treated at a temperature of 800 °C in Example 7, and a single atom catalyst was formed from 800 °C. At a temperature higher than that, a part of Metal-N coordination may be broken to lose the catalyst sites on the single atom.

### Comparative Example 4. Single Atom Catalysts

It was carried out in the same manner as in Example 1, but boric acid was excluded to prepare a single atom catalyst having the structure of Mn-N₄-C (Mn-N-C) in which Mn is coordinated only with N.

### Experimental Example 8. Evaluation of Ammonia Conversion Performance

Conversion (synthesis) of nitrogen to ammonia (N₂ to NH₃) was performed on the single atom catalyst synthesized in Example 1 and the single atom catalyst synthesized in Comparative Example 4.

Conversion of nitrogen to ammonia was carried out in aqueous and gaseous phases, respectively.

### The constitution of electrodes in an aqueous reaction

An electrode H-type cell was used for the conversion reaction of nitrogen to ammonia in the aqueous reaction. The reference electrode, counter electrode, working electrode, and electrolyte under acid, neutral and basic conditions are shown in Table 3 below. The catalyst (the single atom catalyst of Example 1 or the single atom catalyst of Comparative Example 4) was drop-cast on the working electrode in the form of a catalyst ink such that the loading amount was 0.5 mg/cm². In addition, the ink was prepared by mixing 10 mg of catalyst powder (the single atom catalyst of Example 1 or the single atom catalyst of Comparative Example 4), 1 mL of ethanol, 0.9 mL of deionized water (D.I. water), and 0.1 mL of a solution containing Nafion 117, and loading the mixture on the working electrode by 100 µL. Sustainion^{®} X37-50 was used as the ion exchange membrane.

**[Table 3]**

| | **Reference electrode** | **Counter electrode** | **Working electrode** | **Electrolyte** |
|---|---|---|---|---|
| **Acid conditions** | Ag/AgCl | Pt foil | Glassy carbon electrode | 0.05 M H₂SO₄ |
| **Neutral conditions** | Ag/AgCl | Pt foil | Glassy carbon electrode | 0.1 M PBS |
| **Basic conditions** | Hg/HgO | Pt foil | Glassy carbon electrode | 0.1 M KOH |

### The constitution of electrodes in a gaseous reaction

It has the same constitution of electrodes as the "Constitution of electrodes in an aqueous reaction," and a nitrogen (N₂) gas supply chamber was additionally employed.

### Evaluation of ammonia conversion reaction performance in an aqueous reaction

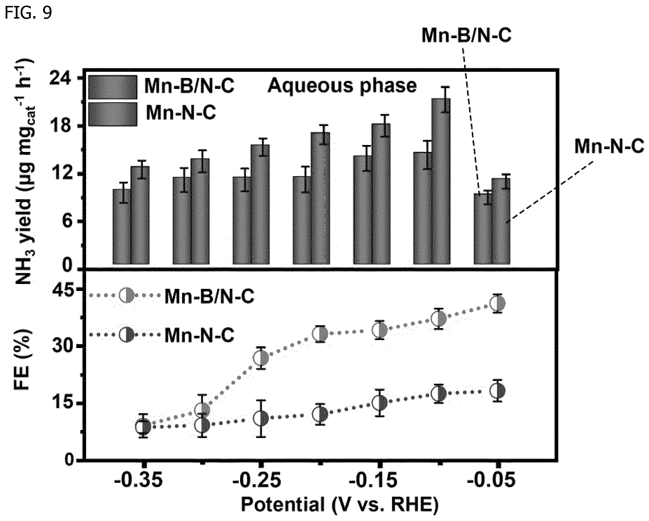

Ammonia conversion performance in the aqueous reaction was evaluated under neutral conditions (0.1 M PBS). The results of evaluation are shown in FIG. 9 and summarized in Table 4.

**Table 4**

| **Synthesis of ammonia (aqueous phase)** | | **Example 1 ("Mn-B/N-C")** | **Comparative Example 4 ("Mn-N-C")** |
|---|---|---|---|
| -0.05 V vs. RHE | FE(%) | 41.23 | 8.7 |
| | Yield(µg·mg_{cat}.⁻¹ h⁻¹) | 11.01 | 9.016 |
| -0.1 V vs. RHE | FE(%) | 37.15 | 9.2 |
| | Yield(µg·mg_{cat}.⁻¹ h⁻¹) | 21.31 | 14.34 |
| -0.15 V vs. RHE | FE(%) | 34.15 | 11 |
| | Yield(µg·mg_{cat}.⁻¹ h⁻¹) | 18.02 | 13.91 |
| -0.2 V vs. RHE | FE(%) | 33.18 | 12.1 |
| | Yield(µg·mg_{cat}.⁻¹ h⁻¹) | 16.89 | 11.26 |
| -0.25 V vs. RHE | FE(%) | 26.89 | 15.1 |
| | Yield(µg·mg_{cat}.⁻¹ h⁻¹) | 15.31 | 11.22 |
| -0.3 V vs. RHE | FE(%) | 13.13 | 17.5 |
| | Yield(µg·mg_{cat}.⁻¹ h⁻¹) | 13.53 | 11.19 |
| -0.35 V vs. RHE | FE(%) | 9.12 | 18.3 |
| | Yield(µg·mg_{cat}.⁻¹ h⁻¹) | 12.51 | 9.624 |

The single atom catalyst ("Mn-B/N-C") according to Example 1 showed the highest performance (e.g., a current efficiency of 37.15 % and a production rate of 21.31 µg·mg_{cat.}⁻¹ h⁻¹) at -0.1 V vs. RHE. On the other hand, Mn-N₄-C, which is the catalyst ("Mn-N-C") free of boron according to Comparative Example 4, showed a current efficiency (FE) of 17.5 % and a production rate (Yield) of 14.33 µ µg·mg_{cat.}⁻¹ h⁻¹ at -0.1 V vs. RHE. That is, it is confirmed that, when Boron is coordinated, the current efficiency may be increased by more than two times, and the production rate may also be increased at the same time.

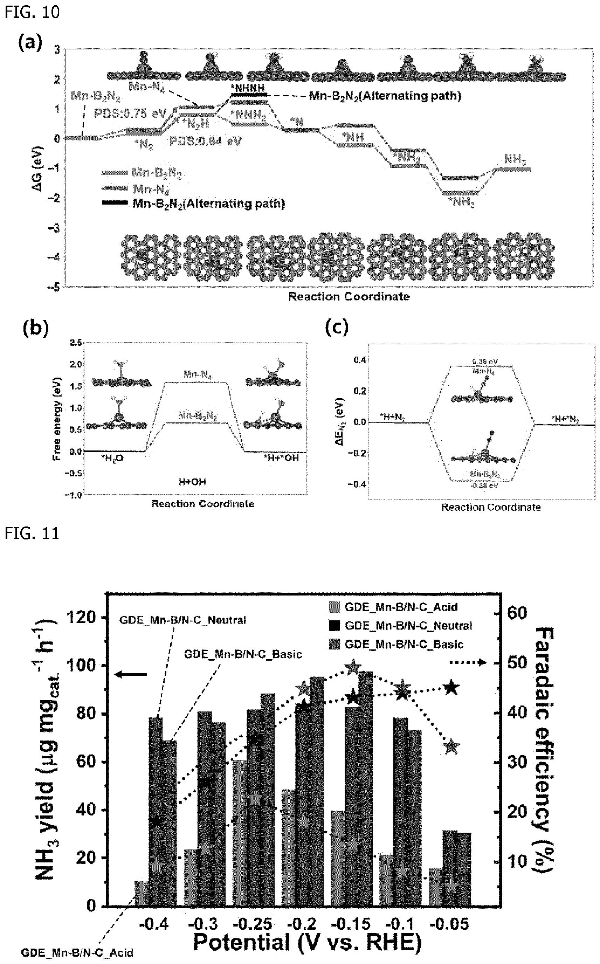

Referring to FIG. 10, as a result of DFT for such a phenomenon, the energy barrier in the first protonation step [N₂^{∗} → N₂H^{∗}] in N₂^{∗} [N₂ adsorption state] on the pathway of the synthesis reaction of N₂ conversion ammonia is lowered as Boron is doped. In addition, it is found through difference in electronic density and Gibbs free energy calculation that the Mn single atom active site in the Mn-N₄ coordination state shows a high activity on the hydrogen evolution reaction (HER), whereas the HER activity at the Mn single atom active site in the Mn-B coordination state is transferred to the boron active site. More specifically, referring to (a) in FIG. 10, in the structure of the single atom catalyst ("Mn-B/N-C") ("Mn-B₂N₂" in FIG. 10) according to Example 1, the energy barrier of Potential Determining Step (PDS) is lower than the structure of the catalyst ("Mn-N-C") according to Comparative Example 4 ("Mn-N₄" in FIG. 9). Referring to (b) of FIG. 10, they are different in terms of the water dissociation energy for proton supply, and the catalyst ("Mn-N-C") according to Comparative Example 4 ("Mn-N4 of FIG. 10) shows a high energy barrier to H₂O adsorption, and finally both H* and OH* coexist at the Mn site, whereas the structure of the single atom catalyst ("Mn-B/N-C") according to Example 1 ("Mn-B/N-C" in FIG. 10) shows a low energy barrier to H₂O adsorption and a Gibbs free energy in which H* adsorption is dominant at the boron site. Referring to (c) of FIG. 10, in an environment similar to (b) of FIG. 10, the energy barrier of H* to N₂ adsorption is downhill from the single atom catalyst ("Mn-B/N-C") according to Example 1 ("Mn-B₂N₂" in FIG. 10). Since H* is at the boron site, Mn may focus only on the nitrogen reduction reaction (NRR).

### Evaluation of ammonia conversion reaction performance in a gaseous reaction

Ammonia conversion performance in the gaseous reaction was evaluated under acid (0.05 M H₂SO₄) conditions, neutral (0.1 M PBS) conditions, and basic (0.1 M KOH) conditions. The results of the evaluation are shown in FIG. 11 and summarized in Table 5 (Acid conditions, Neutral conditions and Basic conditions).

**[Table 5]**

| **Synthesis of ammonia (gaseous)** | | **Example 1 ("Mn-B/N-C")** | | |
|---|---|---|---|---|
| | | **Acid** | **Neutral** | **Basic** |
| -0.05 V vs. RHE | FE(%) | 5.12 | 45.12 | 33.18 |
| | Yield(µg·mg_{cat}.⁻¹ h⁻¹) | 15.13 | 31.13 | 30.07 |
| -0.1 V vs. RHE | FE(%) | 8.18 | 43.98 | 45.12 |
| | Yield(µg·mg_{cat}.⁻¹ h⁻¹) | 21.12 | 78.12 | 72.95 |
| -0.15 V vs. RHE | FE(%) | 13.48 | 43.13 | 49.1 |
| | Yield(µg·mg_{cat}.⁻¹ h⁻¹) | 39.11 | 82.31 | 97.24 |
| -0.2 V vs. RHE | FE(%) | 18.13 | 41.25 | 44.85 |
| | Yield(µg·mg_{cat}.⁻¹ h⁻¹) | 48.15 | 83.18 | 95.19 |
| -0.25 V vs. RHE | FE(%) | 22.78 | 34.75 | 37.14 |
| | Yield(µg·mg_{cat}.⁻¹ h⁻¹) | 60.49 | 81.48 | 88.14 |
| -0.3 V vs. RHE | FE(%) | 12.78 | 26.13 | 30.76 |
| | Yield(µg·mg_{cat}.⁻¹ h⁻¹) | 23.22 | 80.71 | 76.17 |
| -0.4 V vs. RHE | FE(%) | 9.11 | 18.12 | 22.12 |
| | Yield(µg·mg_{cat.}⁻¹ h⁻¹) | 10.12 | 78.18 | 68.47 |

Referring to Figure 11 and Table 5, the single atom catalyst showed the highest performance in basic (0.1 M KOH) conditions, a current efficiency (FE) of 49.1 % and a production rate (Yield) of 97.24 µg·mg_{cat.}⁻¹ h⁻¹ at -0.15 V vs. RHE. It also showed 60.18 µg·mg_{cat.}⁻¹ h⁻¹(22.76 %) at -0.25 V vs. RHE, and 82.31 µg·mg_{cat}⁻¹ h⁻¹(43.13 %) at -0.15 V vs. RHE in acid (0.05 M H₂SO₄) and neutral (0.1 M PBS) conditions.

In addition, the single atom catalysts according to Example 1 (Mn-B/N-C) and Comparative Example 4 (Mn-N₄-C) were compared under basic conditions, and the results showed that the single atom catalyst according to Comparative Example 4 (Mn-N₄-C) had a current efficiency (FE) of 25.75 % and a production rate (Yield) of 76.85 µg·mg_{cat.}⁻¹ h⁻¹ at -0.15 V vs. RHE.

### Experimental Example 9. Carbon Dioxide Reduction Reaction

The synthesis reaction of urea by simultaneous reduction of carbon dioxide and nitrogen was performed on each of the single atom catalyst synthesized in Example 1 and the single atom catalyst synthesized in Comparative Example 4, and an electrolytic system was constructed only in the gaseous reaction and evaluated by chronopotentiometry.

A 3-electrode flow type cell was used to perform the carbon dioxide reduction reaction in the gaseous reaction, and Hg/HgO was used as a reference electrode and a Ni-Fe-Mo alloy was used as a counter electrode. A gas diffusion electrode (GDE) was used as the working electrode, and catalyst ink was drop-cast on the working electrode such that the catalyst loading was 0.5 mg/cm². The ink was prepared by mixing 10 mg of catalyst powder (the single atom catalyst of Example 1 or the single atom catalyst of Comparative Example 4), 1 mL of ethanol, 0.9 mL of deionized water (D.I. water), and 0.1 mL of a solution containing Nafion 117, and loading the mixture on the working electrode by 100 µL. 1 M KOH was used as the electrolyte, and Sustainion^{®} X37-50 was used as the ion exchange membrane.

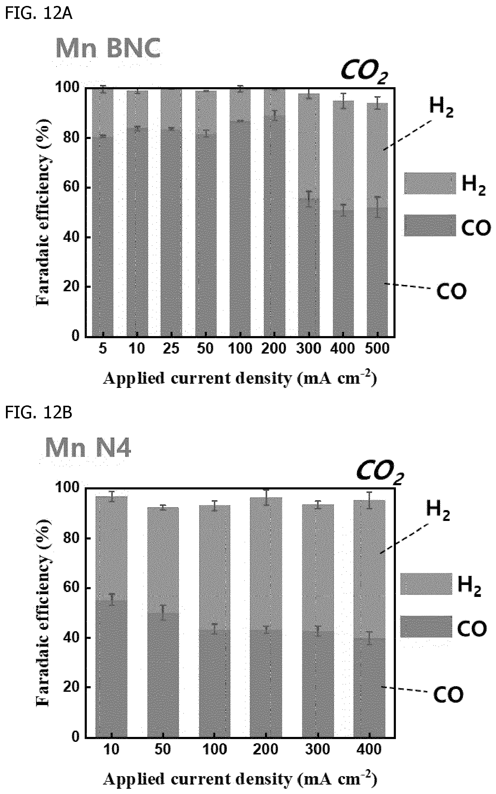

The results of the evaluation are shown in FIG. 12A (the single atom catalyst synthesized in Example 1) and FIG. 12B (the single atom catalyst synthesized in Comparative Example 4), and summarized in Table 6.

**[Table 6]**

| **CO₂ conversion reaction (gaseous)** | | **Example 1 ("Mn-B/N-C")** | **Comparative Example 4 ("Mn-N-C")** |
|---|---|---|---|
| - 5 mA·cm⁻² | FE CO(%) | 80.56 | - |
| | FE H₂(%) | 18.94 | - |
| - 10 mA·cm⁻² | FE CO(%) | 83.7 | 55.3 |
| | FE H₂(%) | 15.21 | 41.3 |
| - 25 mA·cm⁻² | FE CO(%) | 83.5 | - |
| | FE H₂(%) | 16.38 | - |
| - 50 mA·cm⁻² | FE CO(%) | 81.8 | 50.2 |
| | FE H₂(%) | 17 | 42 |
| - 100 mA·cm⁻² | FE CO(%) | 86.7 | 43.52 |
| | FE H₂(%) | 13 | 49.51 |
| - 200 mA·cm⁻² | FE CO(%) | 89.1 | 43.33 |
| | FE H₂(%) | 10.57 | 53.02 |
| - 300 mA·cm⁻² | FE CO(%) | 55.3 | 42.82 |
| | FE H₂(%) | 42.5 | 50.59 |
| - 400 mA·cm⁻² | FE CO(%) | 50.09 | 39.82 |
| | FE H₂(%) | 44 | 55.3 |
| - 500 mA·cm⁻² | FE CO(%) | 52 | - |
| | FE H₂(%) | 42 | - |

Referring to FIGS. 12A and 12B and Table 6, the single atom catalyst (Mn-B/N-C) synthesized in Example 1 in the carbon dioxide conversion reaction had a current efficiency of CO production (FE CO) of 89.1% based on -200 mA·cm⁻², and a current efficiency (FE H₂) of hydrogen evolution reaction (HER) of 10.57%. The single atom catalyst (Mn-N-C) synthesized in Comparative Example 4 showed a current efficiency (FE CO) of 43.33% at the same -200 mA current. In addition, the single atom catalyst (Mn-B/ N-C) showed about 2-fold or higher CO selectivity (5-fold or greater HER inhibition), as compared to the single atom catalyst (Mn-N-C) synthesized in Comparative Example 4. Therefore, it is confirmed that the HER of any reactant in an aqueous reaction may be inhibited by coordinating boron to the Mn single atom active site.

### Experimental Example 10. Synthesis Reaction of Urea by Simultaneous Reduction of Carbon Dioxide and Nitrogen

Synthesis reaction of urea by simultaneous reduction of carbon dioxide and nitrogen was performed on each of the single atom catalyst synthesized in Example 1 and the single atom catalyst synthesized in Comparative Example 4, and an electrolysis system was used only in the gaseous reaction and evaluated by Chronopotentiometry.

To perform the synthesis reaction of urea by simultaneous reduction of carbon dioxide and nitrogen, a three-electrode flow type cell was used, Hg/HgO was used as a reference electrode, and a Ni-Fe-Mo alloy was used as a counter electrode. A gas diffusion electrode (GDE) was used as a working electrode, and catalyst ink was drop-cast on the working electrode so that the catalyst loading was 0.5 mg/cm². The ink was prepared by mixing 10 mg of catalyst powder (the single atom catalyst of Example 1 or the single atom catalyst of Comparative Example 4), 1 mL of ethanol, 0.9 mL of deionized water (D.I. water), and 0.1 mL of a solution containing Nation 117, and loading the mixture on the working electrode by 100 µL. 1 M KOH was used as the electrolyte, and Sustainion^{®} X37-50 was used as the ion exchange membrane.

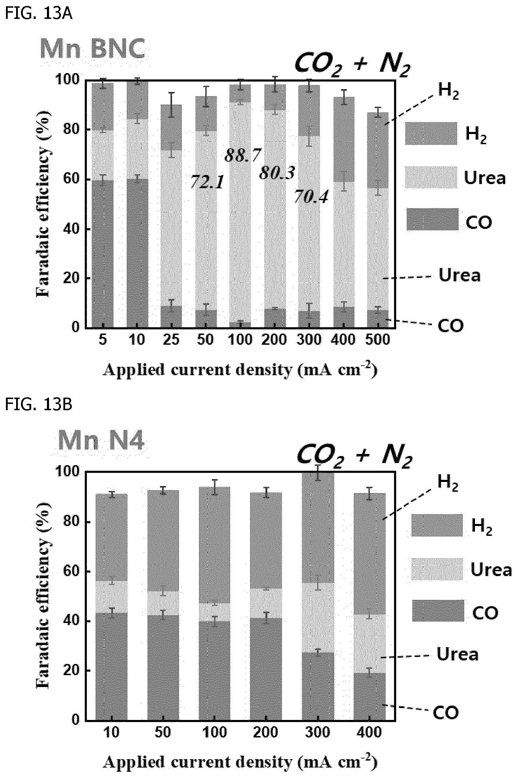

The results of the evaluation are shown in FIG. 13A (the single atom catalyst synthesized in Example 1) and FIG. 13b (the single atom catalyst synthesized in Comparative Example 4), and summarized in Table 7.

**[Table 7]**

| **Synthesis reaction of urea by simultaneous reduction of carbon dioxide and nitrogen** | | **Example 1 ("Mn-B/N-C")** | **Comparative Example 4 ("Mn-N-C")** |
|---|---|---|---|
| - 5 mA·cm⁻² | FE CO(%) | 59.63 | - |
| | FE UREA(%) | 20.26 | - |
| - 10 mA·cm⁻² | FE CO(%) | 60.2 | 43.2 |
| | FE UREA(%) | 24.28 | 13.2 |
| - 25 mA·cm⁻² | FE CO(%) | 9.01 | - |
| | FE UREA(%) | 62.86 | - |
| - 50 mA·cm⁻² | FE CO(%) | 7.47 | 42.5 |
| | FE UREA(%) | 72.11 | 9.66 |
| - 100 mA·cm⁻² | FE CO(%) | 2.41 | 39.75 |
| | FE UREA(%) | 88.67 | 7.52 |
| - 150 mA·cm⁻² | FE CO(%) | 0.0 | - |
| | FE UREA(%) | 91.05 | - |
| - 200 mA·cm⁻² | FE CO(%) | 7.9 | 41.2 |
| | FE UREA(%) | 80.29 | 11.89 |
| - 300 mA·cm⁻² | FE CO(%) | 7 | 27.3 |
| | FE UREA(%) | 70.42 | 28.17 |
| - 400 mA·cm⁻² | FE CO(%) | 8.68 | 19.2 |
| | FE UREA(%) | 50.51 | 23.64 |

FIGS. 13A, 13B and Table 7, the single atom catalyst (Mn-B/N-C) synthesized in Example 1 showed a current efficiency (FE UREA) of 88.7% at a current density of -100 mA cm⁻². The single atom catalyst (Mn-N-C) synthesized in Comparative Example 4 showed a current efficiency (FE UREA) of 7.52% at the same current density of -100 mA cm⁻². It is confirmed that Mn-B coordination with double active sites may activate C-N coupling. In particular, Table 7 shows that it has 0.0 FE CO (%) at a current density of -150 mA cm⁻², which confirms that the generation of CO (carbon monoxide) as a side reaction product is completely suppressed.

The current efficiency of urea synthesis (FE UREA) of the single atom catalyst synthesized in Example 1 in Table 7 is summarized in Table 8. In Table 8, "mmol/mg_{cat.} h" is the number of moles of urea generated relative to the amount of the used catalyst, and "mg/mg_{cat.} h" is the mass of urea generated relative to the amount of the used catalyst.

**[Table 8]**

| **mA/cm²** | **Potential (V vs. RHE)** | **F.E. (%)** | **mmol/mg_{cat.} h** | **mg/mg_{cat.} h** |
|---|---|---|---|---|
| -5 | -0.39 | 20.26 | 0.005 | 0.31 |
| -10 | -0.5 | 24.28 | 0.013 | 0.78 |
| -25 | -0.67 | 62.86 | 0.089 | 5.37 |
| -50 | -0.84 | 72.11 | 0.203 | 12.24 |
| -100 | -1.1 | **88.67** | 0.55 | 33.16 |
| -150 | -1.3 | **91.05** | 0.82 | 49.11 |
| -200 | -1.6 | 80.29 | 0.99 | 59.69 |
| -300 | -2.05 | 70.42 | **1.35** | 81.18 |
| -400 | -2.13 | 50.51 | 1.29 | 77.57 |
| -500 | -2.24 | 49.16 | 1.57 | 94.41 |

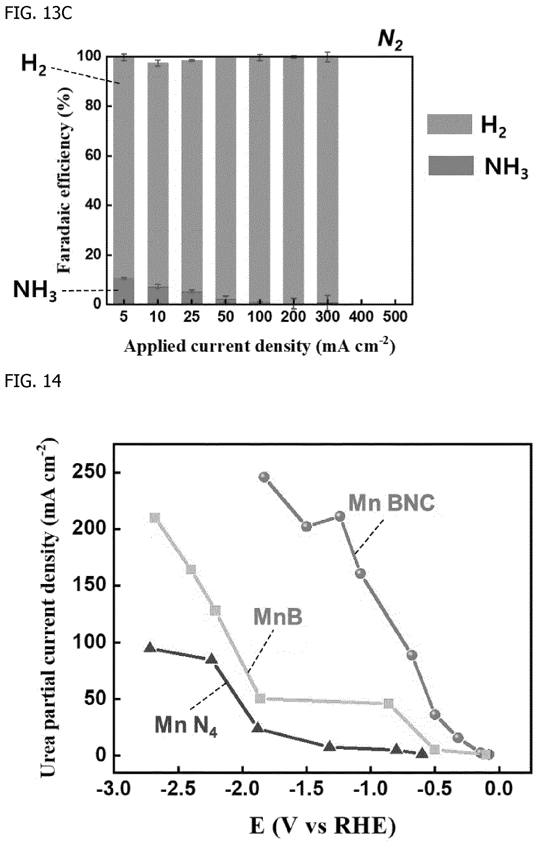

On the other hand, FIG. 13C shows the results of conversion of ammonia (NH₃) of the single atom catalyst synthesized in Example 1 when only nitrogen (N₂) was present, as a comparative example. Referring to FIG. 13C, it is confirmed that, when only nitrogen is present, the activity of ammonia is significantly lower than that of urea.

Additionally, synthesis reaction of urea by simultaneous reduction of carbon dioxide and nitrogen was performed on the MnB catalyst synthesized in the control group, under the same conditions as in Example 1 and Comparative Example 4, and an electrolysis system was used only in the gaseous reaction and evaluated by Chronopotentiometry. The results of comparison are shown in FIG. 14. In FIG. 14, "Mn BNC" represents the single atom catalyst synthesized in Example 1, "Mn N4" represents the catalyst synthesized in Comparative Example 4, and "MnB" represents the MnB catalyst as a control group.

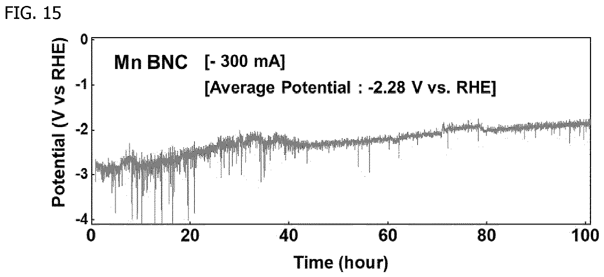

FIG. 15 shows the results of analysis on the average voltage over time under the condition of -300 mA·cm⁻², in the urea synthesis of the single atom catalyst synthesized in Example 1 in Table 7. Referring to FIG. 15, it is confirmed that urea can be stably synthesized at -300 mA·cm⁻² for about 100 hours, which shows the long-term stability and driving possibility of the catalyst.

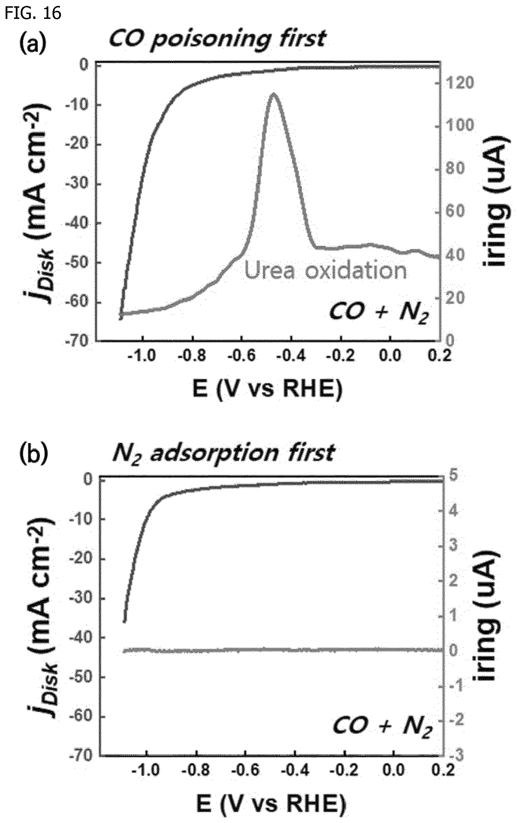

FIG. 16 shows a C-N coupling mechanism activating N₂ gas having a strong triple bond in the element synthesis of the single atom catalyst synthesized in Example 1 in Table 7. In the Rotating Ring-Disk Electrode (RRDE) experiment, the red graph shows an oxidation peak in which a ring made of Pt oxidizes urea. (a) of FIG. 16 shows that, when CO was first adsorbed onto the catalyst and N₂ was then introduced, the (Urea) oxidation peak occurred, whereas (b) of FIG. 16 shows that, when N₂ was first adsorbed onto the catalyst and CO was then introduced, the urea oxidation peak did not appear. This means that, in order to generate urea, CO adsorbed species must be first formed on the catalyst, which proves that the C-N coupling mechanism in the actual electrochemical urea synthesis is that, if CO₂ is first adsorbed onto the MN to generate a CO adsorbed species, the CO adsorbed species may separate and activate N₂ of the triple bond.

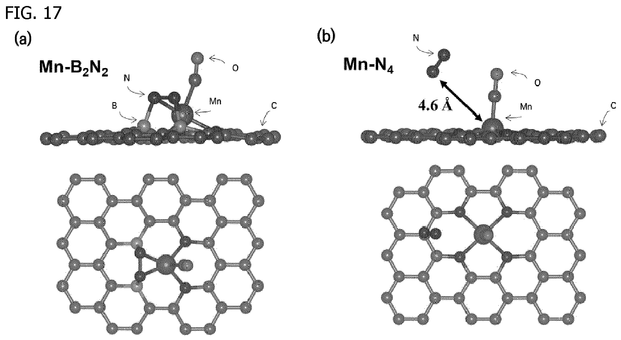

Referring to FIG. 17 to further explain the analysis according to FIG. 16, the single atom catalyst synthesized in Example 1 ("Mn-B₂N₂" in (a) of FIG. 17) in (a) of FIG. 17 shows that N₂ binds to Boron and forms double active sites consisting of Boron (^{∗}N₂) and Mn single atom (*CO). In contrast, the catalyst synthesized in Comparative Example 4 (FIG. In (b) of "Mn-N4") in (b) of FIG. 17 shows that N₂ performs the reaction depending only on physical adsorption.

### Example 8

It was carried out in the same manner as in Example 1, but sodium molybdate (NaMoO₄), instead of manganese chloride (MnCh), was used to prepare an aqueous solution of sodium molybdate and synthesize a single atom catalyst of Mo-B/N-C.

### Example 9

It was carried out in the same manner as in Example 1, but chromium nitrate (CrNO₃), instead of manganese chloride (MnCh), was employed to prepare an aqueous solution of chromic acid nitrate and synthesize a Cr-B/N-C single atom catalyst.

### Example 10

It was carried out in the same manner as in Example 1, but sodium tungstate (NaWO₄), instead of manganese chloride (MnCh), was used to prepare an aqueous solution of sodium tungstate and synthesize a single atom catalyst of W-B/N-C.

### Comparative Example 5

It was carried out in the same manner as in Example 8, but boric acid was excluded to synthesize a single atom catalyst having the structure of Mo-N₄-C (Mo-N-C) in which Mo was coordinated only with N.

### Comparative Example 6

It was carried out in the same manner as in Example 9, but boric acid was excluded to synthesize a single atom catalyst having the structure of Cr-N₄-C (Cr-N-C) in which Cr is coordinated only with N.

### Comparative Example 7

It was carried out in the same manner as in Example 10, but boric acid was excluded to synthesize a single atom catalyst having the structure of W-N₄-C (W-N-C) in which W is coordinated only with N.

### Comparative Example 8

It was carried out in the same manner as in Example 1, but manganese chloride (MnCh) was excluded to prepare a carbon-based catalyst having the structure of B/N-C free of manganese (Mn).

### Experimental Example 11. Analysis of Structure

XPS analysis and Inductively Coupled Plasma-Optical Emission Spectroscopy (ICP-OES) were performed on the single atom catalysts synthesized in Examples 8 to 10 and Comparative Examples 4 to 8. The results of atomic weight analysis and ICP-OES analysis on each single atom catalyst are summarized in Table 9. Table 9 summarizes chemical formulae according to the ratio of the boron (B) element and the nitrogen (N) element.

**[Table 9]**

| | **Atomic weight analysis** | | **ICP-OES analysis** | **Formula** |
|---|---|---|---|---|
| | **B** | **N** | **Metal** | |
| **Example 8** | 3.04 at% | 8.55 at% | 2.4 wt% | Mo-B/N₃-C |
| **Example 9** | 5.1 at% | 8.18 at% | 8.1 wt% | Cr-B/N -C |
| **Example 10** | 5.64 at% | 4.27 at% | 5.5 wt% | W-B₂/N₂-C |
| **Comparative Example 4** | - | 8.18 at% | 0.98 wt% | Mn-N-C |
| **Comparative Example 5** | - | 9.35 at% | 1.95 wt% | Mo-N-C |
| **Comparative Example 6** | - | 7.52 at% | 7.2 wt% | Cr-N-C |
| **Comparative Example 7** | - | 8.01 at% | 4.8 wt% | W-N-C |
| **Comparative Example 8** | 5.72 at% | 7.99 at% | - | B/N-C |

### Experimental Example 12. Evaluation of C-N Coupling Activity

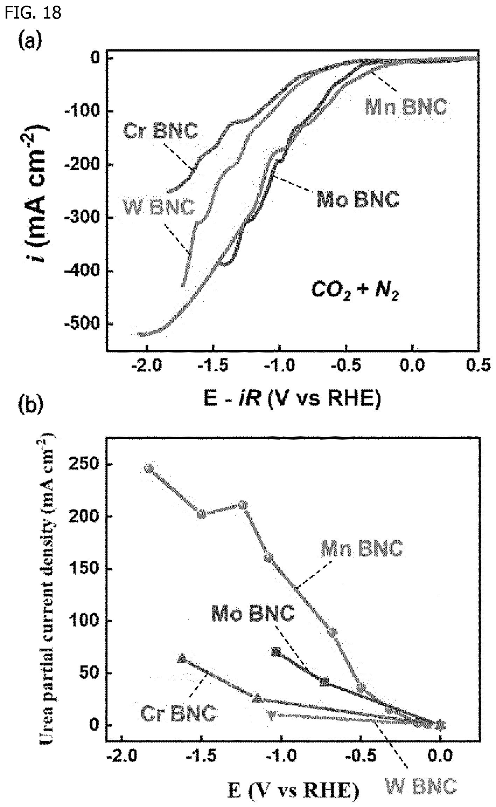

The C-N coupling activity of the single atom catalysts synthesized in Examples 1 and 8 to 10 was measured and shown in FIG. 18.

Referring to FIG. 18, it is confirmed that Example 1 (Mn BNC), Example 8 (Mo BNC), Example 9 (Cr BNC), and Example 10 (W BNC) showed C-N coupling activity in sequence.

(a) of FIG. 18 indicates the results of comparing the current values at the same voltage, which shows a difference in the degree of activation of the reactants when carbon dioxide and nitrogen are fed, shows the electrical conductivity of the catalyst, and confirms that Mn and Mo catalysts show a similar current trend.

On the other hand, (b) of FIG. 18 shows that Mn has a superior urea selectivity in terms of evaluation of urea synthesis, and, even when the same current flows, the Mn catalyst has more current used for urea synthesis.

### Experimental Example 13. Analysis of TEM Images

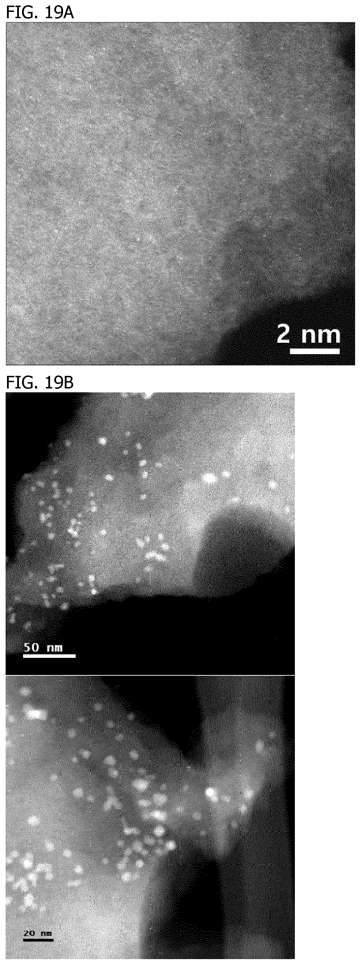

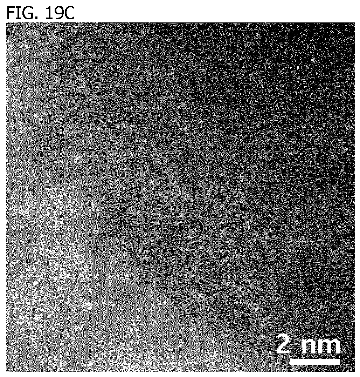

The TEM images of the single atom catalysts synthesized in Examples 8 to 10 were taken and are shown in FIGS. 19A to 19C. FIG. 19A is the TEM image of Example 8 (Mo BNC), FIG. 19B is the TEM image of Example 9 (Cr BNC), and FIG. 19C is the TEM image of Example 10 (W BNC).

### Experimental Example 14-1. Evaluation of Ammonia Conversion Performance in Aqueous Reaction

Ammonia conversion (synthesis) (N₂ to NH₃) of nitrogen was performed on the single atom catalyst synthesized in Example 8 and the single atom catalyst synthesized in Comparative Example 5, respectively. It has the same constitution of electrodes as the "**The constitution of electrodes in an aqueous reaction**" in Experimental Example 8, and the results are summarized in Table 10 below.

**Table 10**

| **Synthesis of ammonia (aqueous phase)** | | **Example 8 ("Mo-B/N-C")** | **Comparative Example 5 ("Mo-N-C")** |
|---|---|---|---|
| -0.1 V vs. RHE | FE(%) | 17.09 | 20.17 |
| | Yield(µg·mg_{cat.}⁻¹ h⁻¹) | 16.87 | 15.12 |
| -0.2 V vs. RHE | FE(%) | 15.15 | 12.1 |
| | Yield(µg·mg_{cat.}⁻¹ h⁻¹ ) | 18.1 | 11.26 |

Referring to Table 10, it is confirmed that the production rate for ammonia synthesis was improved in the structure in which Mo and B formed a coordination.

### Experimental Example 14-2. Synthesis Reaction of Urea by Simultaneous Reduction of Carbon Dioxide and Nitrogen

The synthesis reaction of urea by simultaneous reduction of carbon dioxide and nitrogen was performed on each of the single atom catalyst synthesized in Example 8 and the single atom catalyst synthesized in Comparative Example 5, and an electrolytic system was employed only in the gaseous reaction and evaluated by chronopotentiometry. The results of the evaluation are summarized in Table 11 below.

**[Table 11]**

| **Synthesis reaction of urea by simultaneous reduction of carbon dioxide and nitrogen** | | **Example 8 ("Mo-B/N-C")** | **Comparative Example 5 ("Mo-N-C")** |
|---|---|---|---|
| - 100 mA·cm⁻² | FE CO(%) | 0 | 11.27 |
| | FE UREA(%) | 41.22 | 20.75 |
| - 200 mA·cm⁻² | FE CO(%) | 5.44 | 17.89 |
| | FE UREA(%) | 35.12 | 15.55 |

Referring to Table 11, it is confirmed that the generation of carbon monoxide (CO), which is a side reaction, can be suppressed in a structure in which Mo and B form a coordination.

### Experimental Example 15-1. Evaluation of Ammonia Conversion Performance in Aqueous Reaction

Ammonia conversion (synthesis) (N₂ to NH₃) of nitrogen was performed on the single atom catalyst synthesized in Example 9 and the single atom catalyst synthesized in Comparative Example 6, respectively. It has the same constitution of electrodes as the "**The constitution of electrodes in an aqueous reaction**" in Experimental Example 8, and the results are summarized in Table 12 below.

**[Table 12]**

| **Synthesis of ammonia (aqueous phase)** | | **Example 9 ("Cr-B/N-C")** | **Comparative Example 6 ("Cr-N-C")** |
|---|---|---|---|
| -0.1 V vs. RHE | FE(%) | 24.17 | 8.4 |
| | Yield(µg·mg_{cat.}⁻¹ h⁻¹) | 13.75 | 8.42 |
| -0.2 V vs. RHE | FE(%) | 21.37 | 7.0 |
| | Yield(µg·mg_{cat}.⁻¹ h⁻¹) | 14.33 | 9.72 |

Referring to Table 12, it is confirmed that the current efficiency and production rate for ammonia synthesis can be significantly improved in a structure in which Cr and B form a coordination.

### Experimental Example 15-2. Synthesis Reaction of Urea by Simultaneous Reduction of Carbon Dioxide and Nitrogen

The synthesis reaction of urea by simultaneous reduction of carbon dioxide and nitrogen was performed on the single atom catalyst synthesized in Example 9, and, as in Experimental Example 10, an electrolysis system was used only in the gaseous reaction and evaluated by chronopotentiometry. The results of the evaluation are summarized in Table 13 below.

**[Table 13]**

| **Synthesis reaction of urea by simultaneous reduction of carbon dioxide and nitrogen** | | **Example 9 ("Cr-B/N-C")** |
|---|---|---|
| - 100 mA·cm⁻² | FE CO(%) | 17.35 |
| | FE UREA(%) | 25.36 |
| - 200 mA·cm⁻² | FE CO(%) | 5.93 |
| | FE UREA(%) | 31.74 |

Referring to Table 13, it is confirmed that the synthesis of urea is possible in a structure in which Cr and B form coordination.

### Experimental Example 16-1. Evaluation of Ammonia Conversion Performance in Aqueous Reaction

Ammonia conversion (synthesis) (N₂ to NH₃) of nitrogen was performed on the single atom catalyst synthesized in Example 10 and the single atom catalyst synthesized in Comparative Example 7, respectively. It has the same constitution of electrodes as the "**The constitution of electrodes in an aqueous reaction**" in Experimental Example 8, and the results are summarized in Table 14 below.

**[Table 14]**

| **Synthesis of ammonia (aqueous phase)** | | **Example 10 ("W-B/N-C")** | **Comparative Example 7 ("W-N-C")** |
|---|---|---|---|
| -0.1 V vs. RHE | FE(%) | 50.12 | 31.75 |
| | Yield(µg·mg_{cat.}⁻¹ h⁻¹) | 22.42 | 18.1 |
| -0.2 V vs. RHE | FE(%) | 44.18 | 27.42 |
| | Yield(µg·mg_{cat}.⁻¹ h⁻¹) | 19.47 | 17.62 |

Referring to Table 14, it is confirmed that the current efficiency for ammonia synthesis is high and the production rate is improved in the structure in which W and B form coordination.

### Experimental Example 16-2. Synthesis Reaction of Urea by Simultaneous Reduction of Carbon Dioxide and Nitrogen

The synthesis reaction of urea by simultaneous reduction of carbon dioxide and nitrogen was performed on the single atom catalyst synthesized in Example 10, and, as in Experimental Example 10, an electrolysis system was used only in the gaseous reaction and evaluated by chronopotentiometry. The results of the evaluation are summarized in Table 15 below.

**[Table 15]**

| **Synthesis reaction of urea by simultaneous reduction of carbon dioxide and nitrogen** | | **Example 10 ("W-B/N-C")** |
|---|---|---|
| - 100 mA·cm⁻² | FE CO(%) | 14.5 |
| | FE UREA(%) | 10.45 |

Referring to Table 15, it is confirmed that urea synthesis performance is poor than ammonia synthesis performance in the structure in which W and B form coordination.

### Experimental Example 17-1. Evaluation of Ammonia Conversion Performance in Aqueous Reaction

Ammonia conversion (synthesis) (N₂ to NH₃) of nitrogen was performed on the single atom catalyst synthesized in Comparative Example 8. It has the same constitution of electrodes as the "**The constitution of electrodes in an aqueous reaction**" in Experimental Example 8, and the results are summarized in Table 16 below.

**[Table 16]**

| **Synthesis of ammonia (aqueous phase)** | | **Comparative Example 8 ("B/N-C")** |
|---|---|---|
| -0.1 V vs. RHE | FE(%) | 15.14 |
| | Yield(µg·mg_{cat}.⁻¹ h⁻¹) | 8.15 |
| -0.2 V vs. RHE | FE(%) | 12.4 |
| | Yield(µg·mg_{cat}.⁻¹ h⁻¹) | 5.43 |

Referring to Table 16, it is confirmed that ammonia synthesis performance is exhibited even in the absence of metal (Mn).

### Experimental Example 17-2. Synthesis Reaction of Urea by Simultaneous Reduction of Carbon Dioxide and Nitrogen

The synthesis reaction of urea by simultaneous reduction of carbon dioxide and nitrogen was performed on the single atom catalyst synthesized in Example 8, and, as in Experimental Example 10, an electrolysis system was used only in the gaseous reaction and evaluated by chronopotentiometry. The results of the evaluation are summarized in Table 17 below.

**[Table 17]**

| **Synthesis reaction of urea by simultaneous reduction of carbon dioxide and nitrogen** | | **Comparative Example 8 ("B/N-C")** |
|---|---|---|
| - 100 mA·cm⁻² | FE CO(%) | 57.28 |
| | FE UREA(%) | 0 |

Referring to Table 17, it is confirmed that urea is not synthesized according to the absence of metal (Mn) and, thus, a C-N coupling cannot be formed.

### Example 11

It was carried out in the same manner as in Example 1, but thioacetamide, instead of boric acid, was used to synthesize a single atom catalyst of Mn-S/N-C.

### Example 12

It was carried out in the same manner as in Example 11, but sodium molybdate (NaMoO₄), instead of manganese chloride (MnCh), was used to prepare an aqueous solution of sodium molybdate for synthesizing a single atom catalyst of Mo-S/N-C.

### Example 13

It was carried out in the same manner as in Example 11, but vanadium chloride (VCl₃), instead of manganese chloride (MnCh), was employed to prepare an aqueous solution of vanadium chloride for synthesizing a single atom catalyst of V-S/N-C.

### Comparative Example 9

It was carried out in the same manner as in Example 13, Thioacetamide was excluded to synthesize a single atom catalyst having the structure of V-N₄-C (V-N-C) in which V is coordinated only with N.

### Experimental Example 18. Analysis of Structure

XPS analysis and Inductively Coupled Plasma-Optical Emission Spectroscopy (ICP-OES) was performed on the single atom catalysts synthesized in Examples 11 to 13 and Comparative Example 9. The results of atomic weight analysis and ICP-OES analysis on each single atom catalyst are summarized in Table 18. Table 18 summarizes chemical formulae according to the ratio of the boron (B) element and the nitrogen (N) element.

**[Table 18]**

| | **Atomic weight analysis** | | **ICP-OES analysis** | **Formula** |
|---|---|---|---|---|
| | **S** | **N** | **Metal** | |
| **Example 11** | 1.61 at% | 2.43 at% | 1.6 wt% | Mn-S₂/N₂-C |
| **Example 12** | 9.18 at% | 8.42 at% | 1.77 wt% | Mo-S₂/N₂-C |
| **Example 13** | 7.77 at% | 6.79 at% | 1.23 wt% | V-S₂/N₂-C |
| **Comparative Example 9** | - | 8.29 at% | 1.12 wt% | V-N-C |

### Experimental Example 19-1. Evaluation of Ammonia Conversion Performance in Aqueous Reaction

Ammonia conversion (synthesis) (N₂ to NH₃) of nitrogen was performed on the single atom catalyst synthesized in Example 11 and the single atom catalyst synthesized in Comparative Example 4, respectively. It has the same constitution of electrodes as the "**The constitution of electrodes in an aqueous reaction**" in Experimental Example 8, and the results are summarized in Table 19 below.

**[Table 19]**

| **Synthesis of ammonia (aqueous phase)** | | **Example 11 ("Mn-S/N-C")** | **Comparative Example 4 ("Mn-N-C")** |
|---|---|---|---|
| -0.1 V vs. RHE | FE(%) | 17.09 | 9.2 |
| | Yield(µg·mg_{cat.}⁻¹ h⁻¹) | 16.87 | 14.34 |
| -0.2 V vs. RHE | FE(%) | 15.15 | 12.1 |
| | Yield(µg·mg_{cat}.⁻¹ h⁻¹) | 18.1 | 11.26 |

Referring to Table 19, it is confirmed that, when sulfur (S) as a P block element coordinates with manganese (Mn), together with boron (B), generation of hydrogen can be suppressed, and ammonia synthesis performance also increases.

### Experimental Example 19-2. Synthesis Reaction of Urea by Simultaneous Reduction of Carbon Dioxide and Nitrogen

The synthesis reaction of urea by simultaneous reduction of carbon dioxide and nitrogen was performed on the single atom catalyst synthesized in Example 11 and the single atom catalyst synthesized in Comparative Example 4, and, as in Experimental Example 10, an electrolysis system was used only in the gaseous reaction and evaluated by chronopotentiometry. The results of the evaluation are summarized in Table 20 below.

**[Table 20]**

| **Synthesis reaction of urea by simultaneous reduction of carbon dioxide and nitrogen** | | **Example 11 ("Mn-S/N-C")** | **Comparative Example 4 ("Mn-N-C")** |
|---|---|---|---|
| - 100 mA·cm⁻² | FE CO(%) | 20.14 | 39.75 |
| | FE UREA(%) | 36.82 | 7.52 |
| - 200 mA·cm⁻² | FE CO(%) | 12.9 | 41.2 |
| | FE UREA(%) | 30.29 | 11.89 |

Referring to Table 20, it is confirmed that, when sulfur (S) as a P block element coordinates with manganese (Mn), together with boron (B), side reactions (CO synthesis) can be suppressed, and urea synthesis performance increases.

### Experimental Example 20-1. Evaluation of Ammonia Conversion Performance in Aqueous Reaction

Ammonia conversion (synthesis) (N₂ to NH₃) of nitrogen was performed on the single atom catalyst synthesized in Example 12 and the single atom catalyst synthesized in Comparative Example 5, respectively. It has the same constitution of electrodes as the "**The constitution of electrodes in an aqueous reaction**" in Experimental Example 8, and the results are summarized in Table 21 below.

**[Table 21]**

| **Synthesis of ammonia (aqueous phase)** | | **Example 12 ("Mo-S/N-C")** | **Comparative Example 5 ("Mo-N-C")** |
|---|---|---|---|
| -0.1 V vs. RHE | FE(%) | 30.19 | 20.17 |
| | Yield(µg·mg_{cat.}⁻¹ h⁻¹) | 20.73 | 15.12 |
| -0.2 V vs. RHE | FE(%) | 24.52 | 12.1 |
| | Yield(µg·mg_{cat.}⁻¹ h⁻¹) | 22.04 | 11.26 |

Referring to Table 21, it is confirmed that, when sulfur (S) as a P block element coordinates with molybdenum (Mo), together with boron (B), generation of hydrogen can be suppressed, and ammonia synthesis performance also increases.

### Experimental Example 20-2. Synthesis Reaction of Urea by Simultaneous Reduction of Carbon Dioxide and Nitrogen

The synthesis reaction of urea by simultaneous reduction of carbon dioxide and nitrogen was performed on the single atom catalyst synthesized in Example 12 and the single atom catalyst synthesized in Comparative Example 5, and, as in Experimental Example 10, an electrolysis system was used only in the gaseous reaction and evaluated by chronopotentiometry. The results of the evaluation are summarized in Table 22 below.

**[Table 22]**

| **Synthesis reaction of urea by simultaneous reduction of carbon dioxide and nitrogen** | | **Example 12 ("Mo-S/N-C")** | **Comparative Example 5 ("Mo-N-C")** |
|---|---|---|---|
| - 100 mA·cm⁻² | FE CO(%) | 8.12 | 11.27 |
| | FE UREA(%) | 29.15 | 20.75 |
| - 200 mA·cm⁻² | FE CO(%) | 14.75 | 17.89 |
| | FE UREA(%) | 21.42 | 15.55 |

Referring to Table 22, it is confirmed that, when sulfur (S) as a P block element coordinates with molybdenum (Mo), together with boron (B), side reactions (CO synthesis) can be suppressed, and urea synthesis performance increases.

### Experimental Example 21-1. Evaluation of Ammonia Conversion Performance in Aqueous Reaction

Ammonia conversion (synthesis) (N₂ to NH₃) of nitrogen was performed on the single atom catalyst synthesized in Example 13 and the single atom catalyst synthesized in Comparative Example 9, respectively. It has the same constitution of electrodes as the "**The constitution of electrodes in an aqueous reaction**" in Experimental Example 8, and the results are summarized in Table 23 below.

**[Table 23]**

| **Synthesis of ammonia (aqueous phase)** | | **Example 13 ("V-S/N-C")** | **Comparative Example 9 ("V-N-C")** |
|---|---|---|---|
| -0.1 V vs. RHE | FE(%) | 31.15 | 14.14 |
| | Yield(µg·mg_{cat}.⁻¹ h⁻¹) | 17.12 | 11.75 |
| -0.2 V vs. RHE | FE(%) | 27.69 | 12.1 |
| | Yield(µg·mg_{cat.}⁻¹ h⁻¹) | 19.1 | 12.66 |

Referring to Table 23, it is confirmed that, when sulfur (S) as a P block element coordinates with vanadium (V), generation of hydrogen can be suppressed, and ammonia synthesis performance also increases.

### Experimental Example 21-2. Synthesis Reaction of Urea by Simultaneous Reduction of Carbon Dioxide and Nitrogen

The synthesis reaction of urea by simultaneous reduction of carbon dioxide and nitrogen was performed on the single atom catalyst synthesized in Example 13 and the single atom catalyst synthesized in Comparative Example 9, and, as in Experimental Example 10, an electrolysis system was used only in the gaseous reaction and evaluated by chronopotentiometry. The results of the evaluation are summarized in Table 24 below.

**[Table 24]**

| **Synthesis reaction of urea by simultaneous reduction of carbon dioxide and nitrogen** | | **Example 13 ("V-S/N-C")** | **Comparative Example 9 ("V-N-C")** |
|---|---|---|---|
| - 100 mA·cm⁻² | FE CO(%) | 11.18 | 13.15 |
| | FE UREA(%) | 30.11 | 24.12 |
| - 200 mA·cm⁻² | FE CO(%) | 9.75 | 10.12 |
| | FE UREA(%) | 25.75 | 15.72 |

Referring to Table 24, it is confirmed that, when sulfur (S) as a P block element coordinates with vanadium (V), there is no significant effect on suppressing side reactions (CO synthesis), but urea synthesis performance increases.

Although the preferred embodiments of the present invention have been described in detail above, the scope of the present invention is not limited thereto, and various modifications and improvements thereof made by a person skilled in the art by using the basic concept of the present invention defined in the following claims also fall within the scope of the present invention.

## Claims

1. A single atom catalyst, comprising:
a carbon support doped with nitrogen (N);
a p-block element doped on the carbon support; and
a transition metal forming a coordination bond between the nitrogen (N) and the p-block element.

2. The single atom catalyst of claim 1, wherein the single atom catalyst has a bonding structure represented by Formula 1 below:
[Formula 1] M-XₙN₄₋ₙ,
wherein M is a transition metal, X is a p-block element, and n may be an integer of 1 to 3.

3. The single atom catalyst of claim 1 or 2, wherein the carbon support is selected from the group consisting of carbon nanotubes (CNTs), functionalized CNTs, graphenes, graphene oxides, reduced graphene oxides, graphites, fullerenes, buckytubes, diamonds, amorphous carbons, vapor-grown carbon nanofibers, Super P carbon, Ketjen Black carbon, carbon fibers, hard carbons, hollow carbon nanoparticles, microporous carbon nanoparticles, mesoporous carbon nanoparticles, carbon nanorattles and chitosan.

4. The single atom catalyst of any one of claims 1 to 3, wherein the p-block element is selected from the group consisting of a boron (B) element, a phosphorus (P) element, a selenium (Se) element and a sulfur (S) element.

5. The single atom catalyst of claim 4, wherein the p-block element is a boron (B) element.

6. The single atom catalyst of any one of claims 1 to 5, wherein the transition metal is selected from the group consisting of manganese (Mn), tungsten (W), molybdenum (Mo), chromium (Cr), iron (Fe), vanadium (V), titanium (Ti), copper (Cu), zinc (Zn), cobalt (Co), nickel (Ni), palladium (Pd), ruthenium (Ru), indium (In), tin (Sn), bismuth (Bi), rhodium (Rh), osmium (Os) and tantalum (Ta).

7. The single atom catalyst of claim 6, wherein the transition metal is manganese (Mn).

8. The single atom catalyst of any one of claims 1 to 7, wherein the content of the transition metal is 0.5 to 15 wt%.

9. A method of synthesizing a single atom catalyst comprising:
constantly introducing an aqueous solution of a transition metal precursor into an aqueous solution of a carbon support doped with nitrogen (N);
adding a p-block element precursor and a metal salt to the aqueous solution of the carbon support to prepare a heat-treated precursor;
heat-treating the heat-treated precursor to prepare an intermediate; and
acid washing the intermediate.

10. The method of synthesizing a single atom catalyst of claim 9, wherein the carbon support is selected from the group consisting of carbon nanotubes (CNTs), functionalized CNTs, graphenes, graphene oxides, reduced graphene oxides, graphites, fullerenes, buckytubes, diamonds, amorphous carbons, vapor-grown carbon nanofibers, Super P carbon, Ketjen Black carbon, carbon fibers, hard carbons, hollow carbon nanoparticles, microporous carbon nanoparticles, mesoporous carbon nanoparticles and carbon nanorattles.

11. The method of synthesizing a single atom catalyst of claim 9 or 10, wherein the transition metal is selected from the group consisting of manganese (Mn), tungsten (W), molybdenum (Mo), chromium (Cr), iron (Fe), vanadium (V), titanium (Ti), copper (Cu), zinc (Zn), cobalt (Co), nickel (Ni), palladium (Pd), ruthenium (Ru), indium (In), tin (Sn), bismuth (Bi), rhodium (Rh), osmium (Os) and tantalum (Ta).

12. The method of synthesizing a single atom catalyst of any one of claims 9 to 11, wherein the p-block element is selected from the group consisting of a boron (B) element, a phosphorus (P) element, a selenium (Se) element and a sulfur (S) element.

13. The method of synthesizing a single atom catalyst of any one of claims 9 to 12, wherein the p-block element precursor is an acid substance containing a p-block element.

14. The method of synthesizing a single atom catalyst of claim 13, wherein the acid substance is acetic acid, sulfuric acid (H₂SO₄), hydrochloric acid (HCl), perchloric acid (HClO₄), phosphoric acid (H₃PO₄) or nitric acid (HNO₃).

15. The method of synthesizing a single atom catalyst of claim 13 or 14, wherein the concentration of the acid substance is 1 mM to 1 M.

16. The method of synthesizing a single atom catalyst of any one of claims 9 to 15, wherein the metal salt is metal chloride, metal carbonate or metal nitrate.
